(19) **Europäisches Patentamt / European Patent Office / Office européen des brevets**

(11) **EP 2 928 249 B1**

(12) **EUROPEAN PATENT SPECIFICATION**

(45) Date of publication and mention of the grant of the patent:
**30.05.2018 Bulletin 2018/22**

(51) Int Cl.:
**H04W 72/04** *(2009.01)* **H04W 16/32** *(2009.01)*
**H04W 48/16** *(2009.01)*

(21) Application number: **13861178.5**

(22) Date of filing: **01.11.2013**

(86) International application number:
**PCT/JP2013/079660**

(87) International publication number:
**WO 2014/087773 (12.06.2014 Gazette 2014/24)**

(54) **RADIO BASE STATION, USER TERMINAL, AND FADING FREQUENCY ESTIMATION METHOD**

FUNKBASISSTATION, BENUTZERENDGERÄT UND FREQUENZMESSVERFAHREN

STATION DE BASE RADIO, TERMINAL D'UTILISATEUR, ET PROCÉDÉ D'ESTIMATION DE FRÉQUENCE D'ÉVANOUISSEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.12.2012 JP 2012264771**
**25.01.2013 JP 2013011654**

(43) Date of publication of application:
**07.10.2015 Bulletin 2015/41**

(73) Proprietor: **NTT DOCOMO, INC.**
**Chiyoda-ku**
**Tokyo 100-6150 (JP)**

(72) Inventors:
• **TAKEDA, Kazuaki**
**Tokyo 100-6150 (JP)**
• **NAGATA, Satoshi**
**Tokyo 100-6150 (JP)**
• **TAKAHASHI, Hideaki**
**Tokyo 100-6150 (JP)**
• **ISHII, Hiroyuki**
**Palo Alto, California 94304 (US)**

(74) Representative: **Hoffmann Eitle**
**Patent- und Rechtsanwälte PartmbB**
**Arabellastraße 30**
**81925 München (DE)**

(56) References cited:
WO-A1-2012/098827    CA-A1- 2 826 772
US-A1- 2005 213 682    US-A1- 2011 141 987
US-A1- 2011 230 144    US-A1- 2011 286 436

• **NEC: "UE-assisted Scheduling Switching", 3GPP DRAFT; R2-061949 UE ASSISTED SCHEDULING SWITCHING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Cannes, France; 20060622, 22 June 2006 (2006-06-22), XP050141978, [retrieved on 2006-06-22]**
• **HIDEHIRO ANDO ET AL.: 'Doppler frequency detection using pilot symbols' 2000 NEN THE INSTITUTE OF ELECTRONICS, INFORMATION AND COMMUNICATION ENGINEERS SOGO TAIKAI B-5-59 07 March 2000, XP008179435**
• **CMCC ET AL: "CR on additional special configuration", 3GPP DRAFT; R1-122943 36.211 CR0170R1 (REL-11, B) ADDITIONAL SPECIAL SUBFRAME-FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague; 20120521 - 20120525, 28 May 2012 (2012-05-28), XP050601258, [retrieved on 2012-05-28]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a radio base station, a user terminal and a fading frequency estimation method in a next-generation mobile communication system in which macro cells and small cells are arranged to overlap at least in part.

Background Art

In a UMTS (Universal Mobile Telecommunications System) network, long-term evolution (LTE) has been standardized for the purposes of further increasing high-speed data rates, providing low delay, and so on (non-patent literature 1). In LTE, as multiple access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink).
Also, successor systems of LTE (referred to as, for example, "LTE-advanced" or "LTE enhancement" (hereinafter referred to as "LTE-A")) are under study for the purpose of achieving further broadbandization and increased speed beyond LTE. In the LTE-A system, a HetNet (Heterogeneous Network), in which a small cell (for example, a pico cell, a femto cell and so on) having a local coverage area of a radius of approximately several tens of meters is formed in a macro cell having a wide coverage area of a radius of approximately several kilometers, is under study (see, for example, non-patent literature 2).

Citation List

Non-Patent Literature

  Non-Patent Literature 1: 3GPP TS 36.300 "Evolved UTRA and Evolved UTRAN Overall Description"
  Non-Patent Literature 2: 3GPP TR 36.814 "E-UTRA Further Advancements for E-UTRA Physical Layer Aspects"

3GPP DRAFT R2-061949 UE ASSISTED SCHEDULING SWITCHING, 3RD GENERATION PARTNERSHIP PROJECT (3GPP), MOBILE COMPETENCE CENTRE discloses a radio base station with an arrangement format of reference signal to estimate fading frequency.

Summary of Invention

Technical Problem

Since many small cells are arranged in the above HetNet, there is a threat that the mobility of user terminals decreases. To be more specific, assuming that a user terminal moves at a certain speed, the user terminal enters neighboring cell areas in short time compared to the case of macro cells because the coverage areas of the small cells are small. In this case, the possibility that the handover success rate decreases due to handover delays increases. Also, when a coverage area of a certain size is assumed, the number of cells becomes large with small cells compared to macro cells, and, as a result of this, a handover occurs more frequently between the small cells. As a result of this, the control signals for handovers increase, and there is therefore a threat that the processing load in the radio base stations and the core network node increases. In particular, when a user terminal moves at a high speed, the number of times the user terminal makes a handover per unit time increases significantly, so that the influence upon the above processing load increases.
The present invention has been made in view of the above, and it is therefore an object of the present invention to provide a radio base station, a user terminal and a fading frequency estimation method that can improve the mobility of user terminals in a HetNet in which many small cells are provided to overlap macro cells at least in part.

Solution to Problem

The object of the invention is achieved by the subject-matter of the independent claims. Advantageous embodiments are defined in the dependent claims. Further examples are provided for facilitating the understanding of the invention. The fading frequency estimation method according to a first aspect is a fading frequency estimation method for estimating fading frequency in a user terminal that communicates with a radio base station, and this fading frequency estimation method includes the steps in which: the radio base station: arranges a reference signal, using an arrangement format, in which the reference signal, which is used to estimate fading frequency in the user terminal, is arranged in a relatively high density, in at least part of radio resources allocated for a downlink shared data channel; and transmits allocation information of the radio resources for the downlink shared data channel to the user terminal; and the user terminal: estimates the fading frequency based on a channel estimation value of the reference signal; and transmits the estimated fading frequency to the radio base station in response to a transmission request from the radio base station.

The fading frequency estimation method according to a second aspect is a fading frequency estimation method for estimating fading frequency in a radio base station that communicates with a user terminal, and this fading frequency estimation method includes the steps in which: the user terminal: receives allocation information of radio resources for an uplink shared data channel; and arranges a reference signal, using an arrangement format, in which the reference signal, which is used to estimate fading frequency in the radio base station, is arranged in a relatively high density, in at least part of the radio resources allocated for the uplink shared data channel; and the radio base station estimates the fading frequency based on a channel estimation values of the reference signal.

Advantageous Effects of Invention

According to the present invention, it is possible to provide a radio base station, a user terminal and a fading frequency estimation method that can improve the mobility of user terminals in a HetNet in which many small cells are provided to overlap macro cells at least in part.

Brief Description of Drawings

FIG. 1 is a conceptual diagram of a HetNet;
FIG. 2 is a diagram to explain the mobility of user terminals in a HetNet;
FIG. 3 is a diagram to explain fading frequency in a HetNet;
FIG. 4 provides diagrams to show examples of reference signal arrangement formats in a HetNet;
FIG. 5 is a diagram to explain PDSCH resources in a fading frequency estimation method according to a first example of the present invention;
FIG. 6 provides diagrams to show examples of dynamic control of estimation reference signals in the fading frequency estimation method according to the first example of the present invention;
FIG. 7 provides diagrams to show other examples of dynamic control of estimation reference signals in the fading frequency estimation method according to the first example of the present invention;
FIG. 8 is a diagram to explain PUSCH resources in a fading frequency estimation method according to a second example of the present invention;
FIG. 9 provides diagrams to show examples of dynamic control of estimation reference signals in the fading frequency estimation method according to the second example of the present invention;
FIG. 10 is a schematic diagram to show an example of a radio communication system according to the present embodiment;
FIG. 11 is a diagram to explain an overall structure of a radio base station according to the present embodiment;
FIG. 12 is a diagram to explain an overall structure of a user terminal according to the present embodiment;
FIG. 13 is a diagram to explain a functional structure of a radio base station according to the present embodiment;
FIG. 14 is a diagram to explain a functional structure of a user terminal according to the present embodiment;
FIG. 15 is a diagram to explain a modified example of the fading frequency estimation method according to the first example of the present invention; and
FIG. 16 is a diagram to explain a modified example of the fading frequency estimation method according to the first example of the present invention.

Description of Embodiments

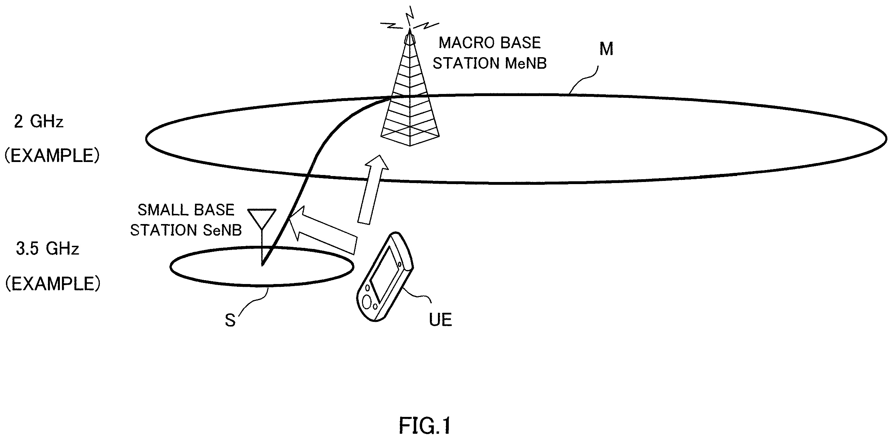

FIG. 1 is a conceptual diagram of a HetNet. As shown in FIG. 1, a HetNet is a radio communication system in which a macro cell M and a small cell S are arranged to geographically overlap at least in part. The HetNet is formed by including a radio base station MeNB that forms the macro cell M (hereinafter referred to as "macro base station"), a radio base station SeNB that forms the small cell S (hereinafter referred to as "small base station"), and a user terminal UE that communicates with the macro base station MeNB and the small base station SeNB.

As shown in FIG. 1, in the HetNet, a certain interface is provided between the macro base station MeNB and the small base station SeNB. In this case, the macro base station MeNB and the small base station SeNB may be connected by wired connection such as optical fiber or non-optical fiber, or may by connected by wireless connection. Alternatively, with other examples, an interface such as the above-noted one needs not be provided between the macro base station MeNB and the small base station SeNB. Furthermore, in the macro cell M, a relatively low frequency band -- for example, 2 GHz -- is used. Also, in the small cell S, a relatively high frequency band -- for example, 3.5 GHz -- is used. It is also possible to use the same frequency band in the macro cell M and in the small cell S. Note that many small cells S may be provided in the macro cell M.

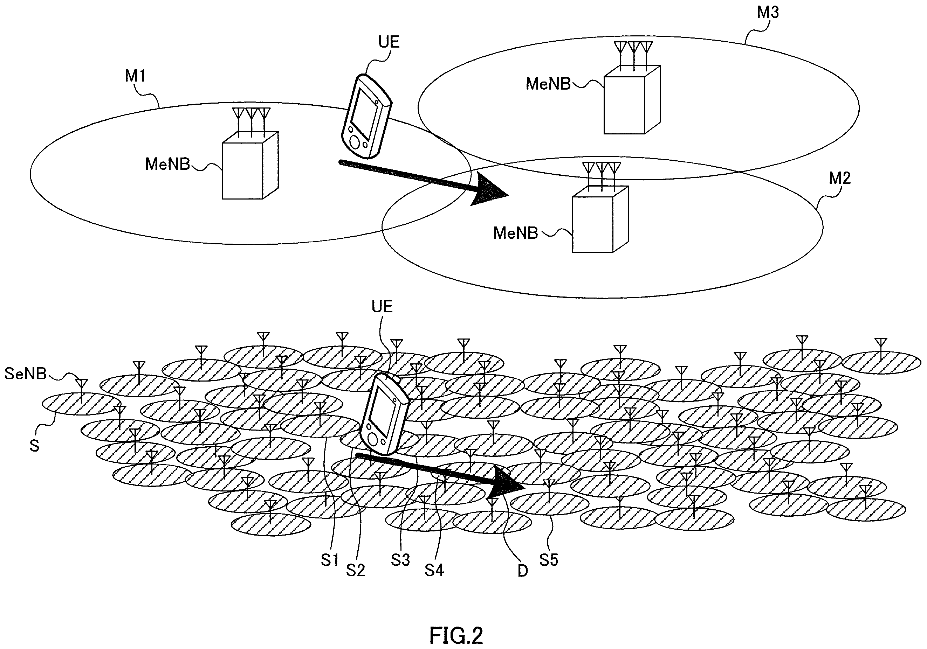

FIG. 2 is a diagram to explain the mobility of user terminals in a HetNet. In the HetNet shown in FIG. 2, many small cells S (including small cells S1 to S5) are provided to geographically overlap macro cells M1 to M3. For example, as shown in FIG. 2, when a user terminal UE moves in a direction D, the user terminal UE has to perform a handover only once between the macro cells M (that is, M1→M2). Meanwhile, between the small cells S, the user terminal UE has to perform a handover four times in the same situation (that is, S1→S2, S2→S3, S3→S4 and S4→S5).

In this way, in the HetNet shown in FIG. 2, the coverage areas of the small cells S1 to S5 are small compared to each coverage area of the macro cells M1 to M3. Consequently, when the user terminal UE moves in the direction D with a high speed, a handover occurs frequently between the small cells S. As a result of this, the handover success rate deteriorates due to handover delays, the control signals increase, and there is therefore a threat that the mobility of the user terminal UE decreases.

So, mobility control to estimate the speed of the movement of a user terminal UE based on fading frequency (Fd), and control the user terminal UE to communicate via macro cells M when the user terminal UE is estimated to be moving at a high speed or communicate via small cells S when the user terminal UE is estimated to be moving at a low speed, is under study. In this mobility control, a user terminal UE is controlled to communicate via macro cells M when moving at a high speed, so that it is possible to prevent the problems of the decreased handover success rate and increased control signals due to frequent occurrence of handovers between small cells S. As a result of this, it is possible to improve the mobility of the user terminal UE.

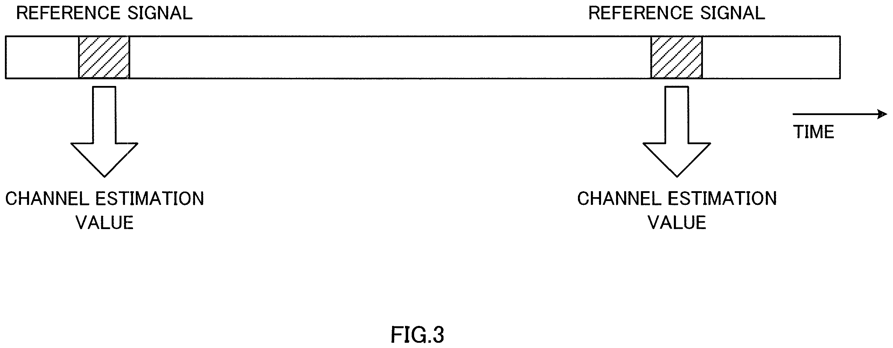

FIG. 3 is a diagram to explain fading frequency (Fd) in a HetNet. Fading frequency (Fd) shows the amount of fluctuation in which the frequency of received signals varies due to the Doppler effect. Fading frequency may be referred to as "maximum Doppler frequency" as well.

This fading frequency is estimated based on the channel estimation values of reference signals. For example, as shown in FIG. 3, fading frequency may be estimated based on the time correlation between the channel estimation values of two reference signals at a predetermined time interval.

In FIG. 3, when there is little time correlation between the channel estimation values of two reference signals, the fading frequency is estimated to be lower than a predetermined threshold. On the other hand, when there is a large time correlation between the channel estimation values of two reference signals, the fading frequency is determined to be higher than the predetermined threshold. Note that the predetermined threshold used in the estimation of fading frequency may be determined based on the time interval between the two reference signals.

The speed of the movement of a user terminal UE may be estimated based on fading frequency estimated as described above. For example, the speed of the movement (v) of a user terminal UE is estimated by following equation 1, in which the fading frequency is Fd and the wavelength is λ. Note that the wavelength (λ) can be calculated from the speed of light (c)/frequency ($f_c$) (for example, in 2 GHz, the wavelength (λ) is 0.15 (m)).

$$\text{Speed of movement } v = \text{fading frequency } Fd \cdot \text{wavelength } \lambda \dots$$

(Equation 1)

In a HetNet, as noted above, the mobility of a user terminal UE is improved by controlling whether communication is carried out via a macro cell M or via a small cell S based on the speed of the movement of the user terminal UE. Accordingly, the mobility of the user terminal UE improves by improving the accuracy of estimation of the speed of the movement of the user terminal UE based on fading frequency.

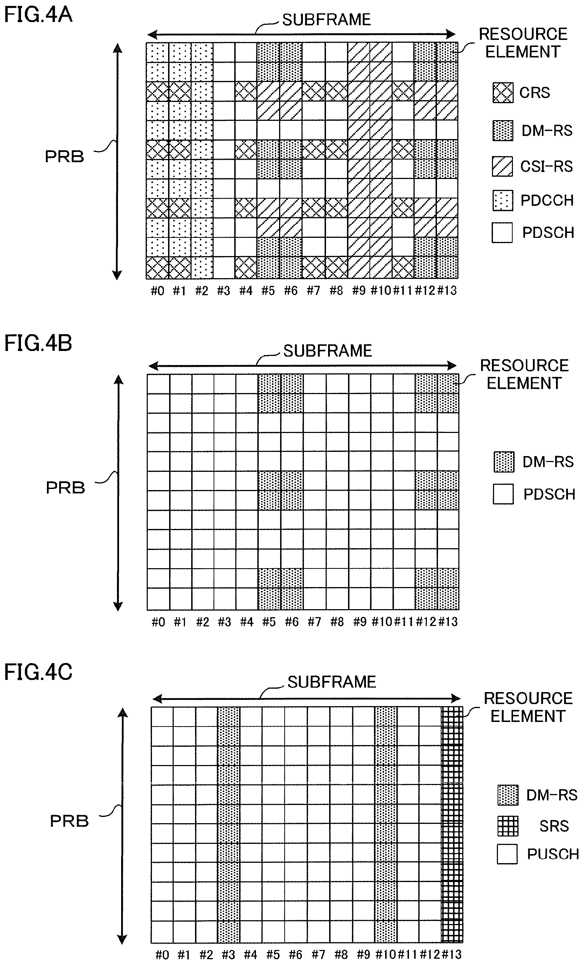

Now, examples of the arrangement (mapping) of the reference signals used in a HetNet will be described with reference to FIG. 4. FIG. 4 provides diagrams to show examples of reference signal arrangement formats (mapping patterns) in a HetNet. Note that FIG. 4 shows PRB pairs formed with two physical resource blocks (PRBs) that are continuous in the time direction. One PRB pair has a time length of one subframe (1 ms), and, for example, is formed with fourteen OFDM symbols in normal subframes that use normal CPs (Cyclic Prefixes). Also, one PRB pair is formed with twelve subcarriers. Furthermore, one PRB pair is formed with 168 (=14×12) resource elements (REs).

FIG. 4A is a diagram to show an example downlink reference signal arrangement format in a legacy carrier type. The legacy carrier type is a carrier, in which a downlink control channel (PDCCH: Physical Downlink Control Channel) is arranged in maximum three OFDM symbols at the top of a subframe. Although the legacy carrier is presumed to be used primarily in macro cells M, it may be used in small cells S as well. Note that the legacy carrier type may be referred to as a "coverage carrier," a "carrier" and so on.

For example, in the legacy carrier type shown in FIG. 4A, in one PRB pair, cell-specific reference signals (CRSs: Cell-specific Reference Signals) are arranged in twenty-four REs. Also, measurement reference signals (CSI-RSs: Channel State Information-Reference Signals) are arranged in forty REs. Furthermore, demodulation reference signals (DM-RSs: DeModulation Reference Signal) are arranged in twenty-four REs. Then, a downlink shared data channel (PDSCH: Physical Downlink Shared Channel) is arranged in the rest of the REs.

FIG. 4B is a diagram to show an example downlink reference signal arrangement format in a new carrier type. Unlike a legacy carrier, the new carrier type is a carrier, in which, for example, the region where a downlink control channel (PDCCH: Physical Downlink Control Channel) is arranged over maximum three OFDM symbols from the top of a subframe, cell-specific reference signals (CRSs), and so on are removed or are inserted at a lower density. The new carrier type is presumed to be used primarily in small cells S. Note that the new carrier type may also be referred to as an "additional carrier type," or may be simply referred to as a "new carrier," an "additional carrier," a "capacity carrier" and so on.

For example, in the new carrier type shown in FIG. 4B, while user-specific DM-RSs are arranged in twenty-four REs in one PRB pair, no cell-specific CRS is arranged. By this means, REs in which the PDSCH can be arranged increase, so that it is possible to improve throughput.

Note that the arrangement formats of downlink reference signals shown in FIGs. 4A and 4B are only examples, and are by no means limiting. For example, in FIG. 4A, the density of arranging the CRSs, DM-RSs and CSI-RSs may be changed in accordance with various conditions such as the number of layers, the number of antenna ports and so on. Also, in FIG. 4B, CRSs and CSI-RSs may be arranged. In this case, the density of arranging the CRSs and CSI-RSs is preferably lower than that in FIG. 4A. Also, in FIG. 4B, the density of arrangement and the positions of inserting DM-RSs may be changed depending on various conditions such as the number of layers, the number of antenna ports and so on.

FIG. 4C is a diagram to show an example uplink reference signal arrangement format. As shown in FIG. 4C, on the uplink, DM-RSs are arranged in two OFDM symbols in one subframe. Also, SRSs (Sounding Reference Signals) are arranged in the last OFDM symbol in one subframe. Then, an uplink shared data channel (PUSCH: Physical Uplink Shared Channel) is arranged in the rest of the REs.

Note that the arrangement of uplink reference signal shown in FIG. 4C is only an example, and is by no means limiting. For example, in FIG. 4C, the SRSs have only to be arranged in a predetermined cycle (for example, in a five-subframe cycle). Also, aperiodic SRSs may be arranged in addition to the above periodic SRSs.

Now, as for the reference signals to use in the above-described estimation of fading frequency, for example, the CRSs shown in FIG. 4A may be used. Meanwhile, with HetNet small cells S, cases might occur where no CRS is arranged as shown in FIG. 4B, the density of arranging CRSs is made lower than in the arrangement format shown in FIG. 4A, and so on. In this way, when an arrangement format, in which the density of the reference signals that are used to estimate fading frequency is relatively low, is used in the small cells S of a HetNet, there is a threat that the accuracy of the estimation of fading frequency decreases.

The above problems will be described in more detail. Generally, when fading frequency is estimated based on the time correlation between the channel estimation values of reference signals, the fading frequency that can be estimated depends on the time interval (hereinafter referred to as "$\Delta T$") between the two reference signals where the time correlation is calculated. For example, when the value of "$Fd \cdot \Delta T$" is smaller than 0.2, the fluctuation of the channel estimation values is sufficiently small, so that the time correlation between the channel estimation values can be considered high. In other words, when the time correlation between the channel estimation values is high, the fading frequency may be lower than "$0.2/\Delta T$." To be more specific, when $\Delta T$ is 1 msec, $0.2/\Delta T=200$ Hz holds, so that, if the time correlation between the channel estimation values of two reference signals where $\Delta T=1$ msec is high, the fading frequency may be 200 Hz or lower. Note that 0.2 here is only an example, and can be 0.1, 0.15, and so on. Note that the above estimation of fading frequency is described in, for example, non-patent literature ("Doppler frequency detection using pilot symbols," THE INSTITUTE OF ELECTRONICS, INFORMATION AND COMMUNICATION ENGINEERS GENERAL CONFERENCE, B-5-59, 2000).

Here, if the above reference signals are transmitted continuously in time, the time interval $\Delta T$ between the above reference signals can be selected in a flexible manner, so that it is possible to estimate various fading frequencies. However, since reference signals are not necessarily transmitted continuously in time in the downlink of LTE, it is not possible to select above $\Delta T$ in a flexible manner. Also, as noted earlier, in a new carrier type, which provides a carrier of a novel type, the density of the above reference signal is likely to be decreased, and this results in a further decrease of flexibility in the selection of $\Delta T$.

Also, this problem is even more obvious on the uplink. In the uplink of LTE, a user terminal generally transmits uplink signals intermittently, not continuously. Now, when two uplink signals are transmitted intermittently, generally, these two uplink signals have varying phases on the transmitting side, and this makes the above-described fading frequency estimation on the receiving side based on time correlation difficult.

So, the present inventors have arrived at the present invention upon conceiving of improving the accuracy of the estimation of fading frequency in small cells S in a HetNet by using an arrangement format in which the reference signals that are used to estimate fading frequency are arranged in a relatively high density, or by using an arrangement format in which the reference signals that are used to estimate fading frequency are arranged such that the value of $\Delta$T can be selected in a flexible manner when estimating fading frequency.

As the accuracy of the estimation of fading frequency improves, the accuracy of the estimation of the speed of the movement of a user terminal UE based on that fading frequency also improves. Consequently, according to the present invention, it is possible to improve the mobility of a user terminal UE when the above-noted mobility control is executed based on the speed of the movement of the user terminal UE based on the above fading frequency.

(First Example)

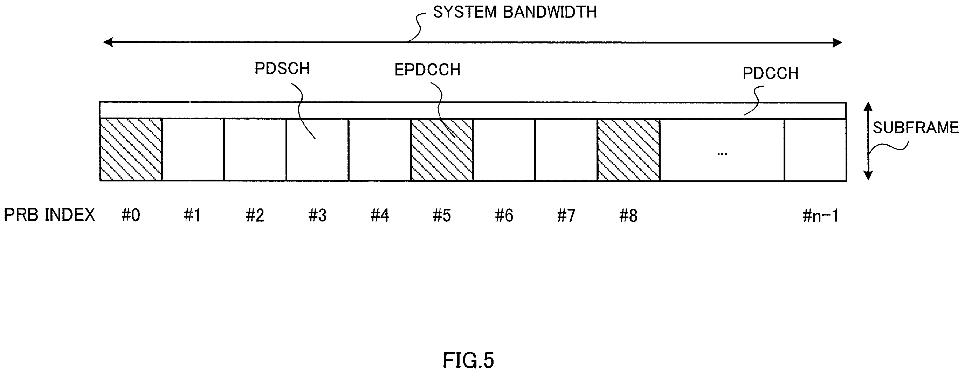

Now, the fading frequency estimation method according to a first example of the present invention will be described with reference to FIG. 5 to FIG. 7. With the fading frequency estimation method according to the first example, fading frequency is estimated on the user terminal UE side in a small cell S. The small base station SeNB arranges estimation reference signals using an arrangement format (hereinafter referred to as "estimation format"), in which the estimation reference signals are arranged in a relatively high density, in at least part of the radio resources allocated for the PDSCH (downlink shared data channel) (hereinafter referred to as "PDSCH resources"), and transmits allocation information of the PDSCH resources to a user terminal UE. Also, the user terminal UE estimates fading frequency based on the channel estimation values of the estimation reference signals, and transmits the estimated fading frequency to the small base station SeNB in response to a transmission request from the small base station SeNB.

Here, the estimation reference signals are reference signals that are used to estimate the fading frequency in the user terminal UE in the small cell S. For the estimation reference signals, one of DM-RSs (DeModulation Reference Signals), CSI-RSs (measurement reference signals), CRS (Cell-specific Reference Signals) and new reference signals that are known at the small base station SeNB and the user terminal UE may be used, or combinations of these reference signals may be used.

Also, the estimation format is an arrangement format (mapping pattern), in which the estimation reference signals are arranged in a relatively high density. For example, in the estimation format, the estimation reference signals may be arranged in all the resource elements in a PRB pair. Note that, in the estimation format, as long as the density of the estimation reference signals is relatively high, the estimation reference signals need not be arranged in all the resource elements in a PRB pair. For example, in a PRB pair, the estimation reference signals may be arranged in resource elements other than the resource elements where the PDCCH is arranged. It is equally possible to arrange the estimation reference signals such that the estimation reference signals are distributed in the time/frequency direction in a PRB pair.

Also, the PDSCH resources are radio resources that are allocated for the PDSCH. PDSCH resources are radio resources provided along the time/frequency direction, such as, for example, physical resource blocks (PRBs), PRB pairs formed with two PRBs that are continuous in the time direction, resource block groups (RBGs) formed with a plurality of PRBs and so on. PDSCH resources are allocated to user terminals UE in accordance with, for example, the scheduling result of each subframe (1 ms).

FIG. 5 is diagram to explain an example of PDSCH resources. In FIG. 5, PDSCH resources are allocated in PRB pair units, but this is by no means limiting. In FIG. 5, the PRB pairs other than PRB pairs #0, #5 and #8 for an enhanced downlink control channel (EPDCCH: Enhanced Physical Downlink Control Channel) are the PDSCH resources. Note that, in a new carrier type, the PDCCH, which is arranged over the system bandwidth, needs not be arranged.

In the fading frequency estimation method according to the first example, the small base station SeNB may arrange the estimation reference signals using the above-described estimation format, in all the PDSCH resources (for example, in the PRB pairs other than PRB pairs #0, #5 and #8 in FIG. 5).

Alternatively, the small base station SeNB may arrange the estimation reference signals by using the above-described estimation format in part of the PDSCH resources. In particular, the small base station SeNB may arrange the estimation reference signals using the above-described estimation format in the PDSCH resources at both end parts of the system bandwidth (for example, PRB pairs #1 and #n-1 in FIG. 5). By using the estimation format in the PUSCH resources at both end parts of the system bandwidth, it is possible to achieve a frequency diversity effect (diversity gain) with respect to the estimation reference signals.

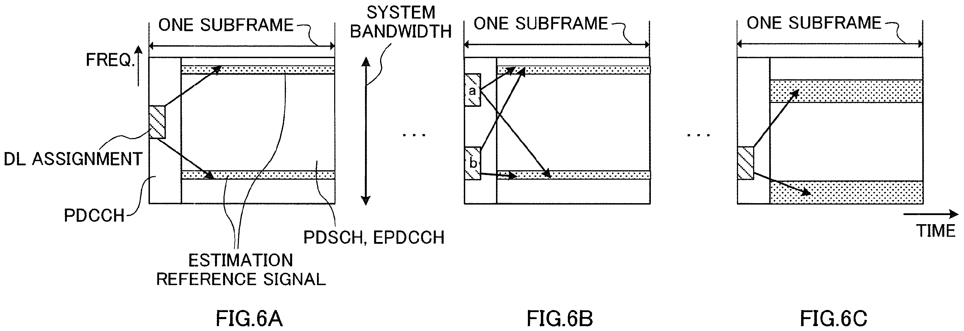

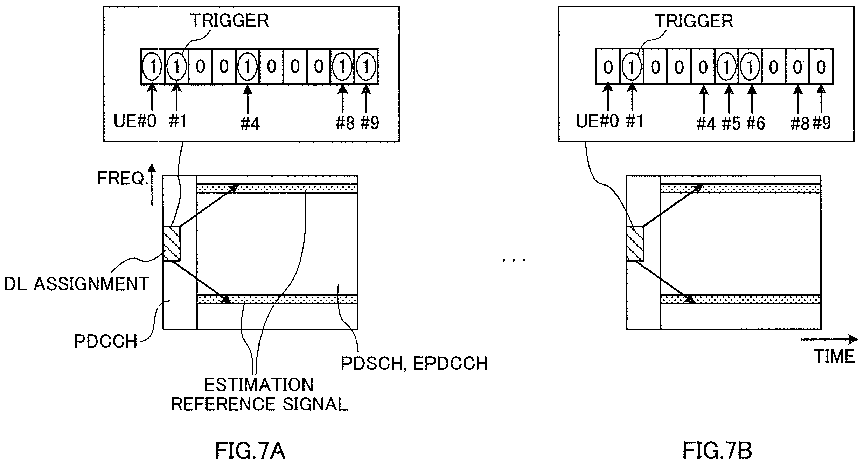

Also, with the fading frequency estimation method according to the first example, the small base station SeNB dynamically control the PDSCH resources where the estimation reference signals are arranged using the estimation format. Examples of this dynamic control will be described with reference to FIG. 6 and FIG. 7.

FIG. 6 provides diagram to explain examples of dynamic control using allocation information of PDSCH resources. The allocation information of PDSCH resources (hereinafter referred to as "PDSCH allocation information") may be transmitted in the PDCCH as shown in FIG. 6A to FIG. 6C, or may be transmitted in an EPDCCH that is frequency-division-multiplexed with the PDSCH. Note that the PDSCH allocation information may be referred to as downlink assignments (DL assignments) such as DCI formats 1A, 2 and 2A to 2C, downlink scheduling information, downlink grants (DL grants) and so on.

In FIG. 6A, the PDSCH resources where the estimation reference signals are arranged using the estimation format are designated by using PDSCH allocation information. This PDSCH allocation information may contain trigger information to indicate that the estimation format is used. For example, the trigger information may be a combination of bit fields other than the "resource allocation field" included in the DCI format, or may be a bit field that is newly added.

Also, this PDSCH allocation information may contain the number of consecutive subframes where the estimation format is used. By this means, it is possible to dynamically change the number of PRB pairs in the time direction where the estimation format is used. Note that the number of the consecutive subframes may be transmitted to the user terminal UE by using higher layer signaling.

In FIG. 6B, the same PDSCH resources where the estimation reference signals are arranged using the estimation format are designated by using PDSCH allocation information (DL assignments a/b) for different user terminals UE. By this means, a plurality of user terminals UE can estimate fading frequency based on estimation reference signals arranged in the same PDSCH resources, so that it is possible to reduce the number of PDSCH resources where the estimation format is used.

In FIG. 6C, the PDSCH resources where the estimation reference signals are arranged using the estimation format are increased along the frequency direction by using the PDSCH allocation information. By this means, it is possible to dynamically change the PDSCH resources along the frequency direction where the estimation format is used.

FIG. 7 provides diagrams to explain other examples of dynamic control using PDSCH resource allocation information. The PDSCH resource allocation information in this FIG. 7 is a signal which a plurality of user terminals UE can receive, and the above trigger information may be a trigger field that contains trigger bits for a plurality of user terminals UE. The trigger field to contain the trigger bits may be included in the PDSCH allocation information or may be added. Each trigger bit is set to "1" or "0" depending on whether the estimation format is used with respect to the corresponding user terminal UE.

Also, in FIG. 7, the small base station SeNB may report to each user terminal, by using higher layer signaling, at least one of position information of the trigger bit for that user terminal in the trigger field, information about the PDSCH resources where the estimation format is used (for example, the PRB indices and so on), and information for identifying the type of downlink control information (DCI) including PDSCH allocation information (for example, RNTIs (Radio Network Temporary Identifiers) and so on).

For example, in FIG. 7A, the trigger bit field of the PDSCH allocation information (DL assignment) indicates that the estimation format is used for five user terminals UE #0, #1, #4, #8 and #9. These five user terminals UE each make reference to that user terminal's trigger bit in the trigger bit field, and find out that the estimation format is used, based on the position information that is reported using higher layer signaling. Also, these five user terminals UE perform channel estimation based on the estimation reference signals arranged in the PRB pairs reported using higher layer signaling.

Meanwhile, in FIG. 7B, the trigger bit field for the PDSCH allocation information indicates that the estimation format is used with respect to three user terminals UE #1, #5, and #6. These three user terminals UE each make reference to that user terminal's trigger bit in the trigger bit field, and find out that the estimation format is used, based on the position information that is reported using higher layer signaling. Also, these three user terminals UE perform channel estimation based on the estimation reference signals arranged in the PRB pairs reported using higher layer signaling.

In FIG. 7B, unlike FIG. 7A, the trigger bits for user terminal UE #0, #4, and #9 indicate that the estimation format is not used with respect to these three user terminals UE. Consequently, the three user terminals UE each make reference to that user terminal's trigger bit in the trigger bit field, and find out that the estimation format is not used, based on the position information that is reported using higher layer signaling.

In this way, by using trigger information that groups the trigger bits of a plurality of user terminals UE, it is possible to report whether or not the estimation format is used to the plurality of user terminals UE all together.

Also, with the fading frequency estimation method according to the first example, a user terminal UE transmits fading frequency that is estimated based on the above estimation reference signals to the small base station SeNB in response to a transmission request from the small base station SeNB.

This fading frequency transmission request may be transmitted from the small base station SeNB to the user terminal UE by using PUSCH resource allocation information (hereinafter referred to as "PUSCH allocation information"), which will be described later. To be more specific, this transmission request may be re-use the conventional bit field that is contained in the PUSCH allocation information, or may use the bit field that is newly added in the PUSCH allocation information. By using PUSCH allocation information, it is possible to transmit fading frequency to the small base station SeNB using the PUSCH resources designated by the PUSCH allocation information.

In this case, the information that is transmitted from the user terminal UE to the small base station SeNB may not be the fading frequency itself, and may be a measurement result that is calculated by the above-described fading frequency estimation process. For example, this may be information to represent that "there is a time correlation" or "there is no time correlation" when the time interval $\Delta T$ between two predetermined reference signals is designated. In this case, "1" suffices for the number of bits to use as the above information, so that it is possible to reduce the overhead of the above information. Note that the time interval $\Delta T$ between the above two predetermined reference signals may be reported from the small base station SeNB to the user terminal UE by a higher layer -- for example, RRC layer -- control signal. Note that "there is a time correlation/there is no time correlation" above may be, for example, "the inner product value between channel estimation values is large/small," or may be other metrics to represent correlation in time.

Also, the fading frequency transmission request may be transmitted from the small base station SeNB to the user terminal UE by using the above PDSCH allocation information. To be more specific, the above transmission request may re-use the conventional bit field that is contained in the PDSCH allocation information, or may use a bit field that is newly added in the PDSCH allocation information.

In this case, the information that is transmitted from the user terminal UE to the small base station SeNB may not be the fading frequency itself, and may be a measurement result that is calculated by the above-described fading frequency estimation process. For example, this may be information to represent that "there is a time correlation" or "there is no time correlation" when the time interval $\Delta T$ between two predetermined reference signals is designated. In this case, "1" suffices for the number of bits to use as the above information, so that it is possible to reduce the overhead of the above information. Note that the time interval $\Delta T$ between the above two predetermined reference signals may be reported from the small base station SeNB to the user terminal UE by a higher layer -- for example, RRC layer -- control signal. Note that "there is a time correlation/there is no time correlation" above may be, for example, "the inner product value between channels estimation values is large/small," or may be other metrics to represent correlation in time.

Alternatively, the user terminal UE may transmit information that relates to the estimated fading frequency to the small base station SeNB as a higher layer (RRC layer) control signal. Here, the above higher layer control signal may be, for example, a measurement report.

Alternatively, the user terminal UE may transmit the information related to the estimated fading frequency to the small base station SeNB as a higher layer (MAC layer) control signal. The higher layer control signal here may be, for example, a MAC control element. When transmitting the MAC control element, too, as has been described above, information to represent that "there is a time correlation/there is no time correlation" may be transmitted.

When PDSCH allocation information is used, the uplink resources (PUSCH resources (described later) and so on) to transmit information that relates to fading frequency such as the ones noted above are reported to the user terminal UE in advance by using higher layer signaling (for example, RRC layer signaling and so on). By this means, in response to a transmission request by way of PDSCH allocation information, the user terminal UE can transmit the fading frequency to the small base station SeNB by using uplink resources that are reported by higher layer signaling.

With the fading frequency estimation method according to the first example, the small base station SeNB arranges the estimation reference signals using an estimation format, in which the estimation reference signals are arranged in a relatively high density, in at least part of the PDSCH resources. Consequently, it is possible to prevent the accuracy of the estimation of fading frequency in a user terminal UE in the small cell S from decreasing.

Also, by designating the PDSCH resources where the estimation format is used by using PDSCH allocation information, it is possible to configure the time to transmit and the frequency to transmit the estimation reference signals, in a flexible manner. Consequently, it is possible to prevent the increase of overhead by the transmission of the estimation reference signals.

Also, by designating the PDSCH resources where the estimation format is used by using PDSCH allocation information, it is possible to dynamically control the time interval or the frequency bandwidth to transmit the estimation reference signals, using the estimation format. As a result of this, the user terminal UE can perform channel estimation by selecting the time interval or the frequency bandwidth of the estimation reference signals flexibly, and improve the accuracy of the estimation of fading frequency.

Also, since fading frequency can be estimated in the user terminal UE, fading frequency can be estimated adequately even when the user terminal UE carries out intermittent transmissions on the uplink.

Note that, according to other embodiments, instead of a small base station SeNB, a macro base station MeNB may arrange the estimation reference signals by using an arrangement format (hereinafter referred to as "estimation format"), in which the estimation reference signals are arranged in a relatively high density, in at least part of the radio resources allocated for the PDSCH (downlink shared data channel) (hereinafter referred to as "PDSCH resources"), and transmit PDSCH resource allocation information to a user terminal UE, and the user terminal UE may estimate fading frequency based on the channel estimation values of the estimation reference signals, and transmit the estimated fading frequency to the macro base station MeNB in response to a transmission request from the macro base station MeNB.

As has been described above, from the perspective of controlling a user terminal UE to communicate via a macro cell M, not via a small cell S, when the speed of the movement of the user terminal UE is high, it is preferable to be able to estimate the speed of the movement of the user terminal UE while the user terminal UE is communicating via the macro cell M. Consequently, by estimating the speed of the movement of the user terminal UE while the user terminal UE is communicating with the macro base station MeNB, it is possible to execute the above control more efficiently.

Also, with the fading frequency estimation method according to the first example, the information that relates to fading frequency and that is transmitted from the user terminal UE to the small base station SeNB may be measured (estimated) at one time, or may be measured (estimated) at a plurality of times. Note that the information related to fading frequency may be fading frequency itself as has been described above, or may be time correlation information to represent correlation in time such as "there is a time correlation/there is no time correlation," "the inner product value between channels estimation values is large/small," and so on.

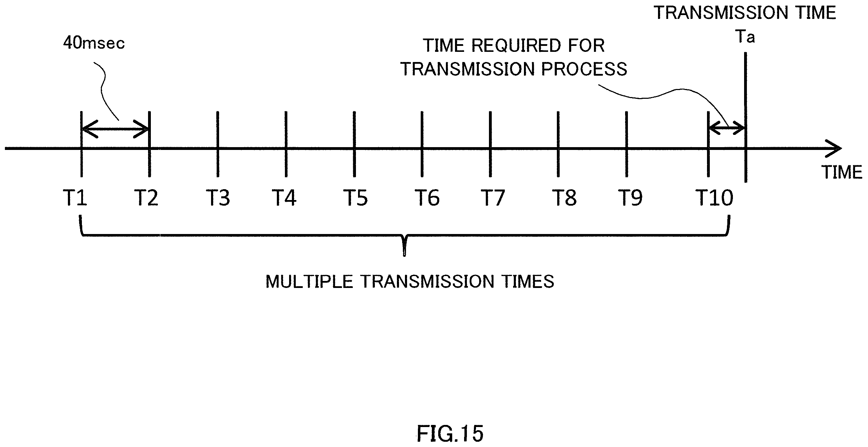

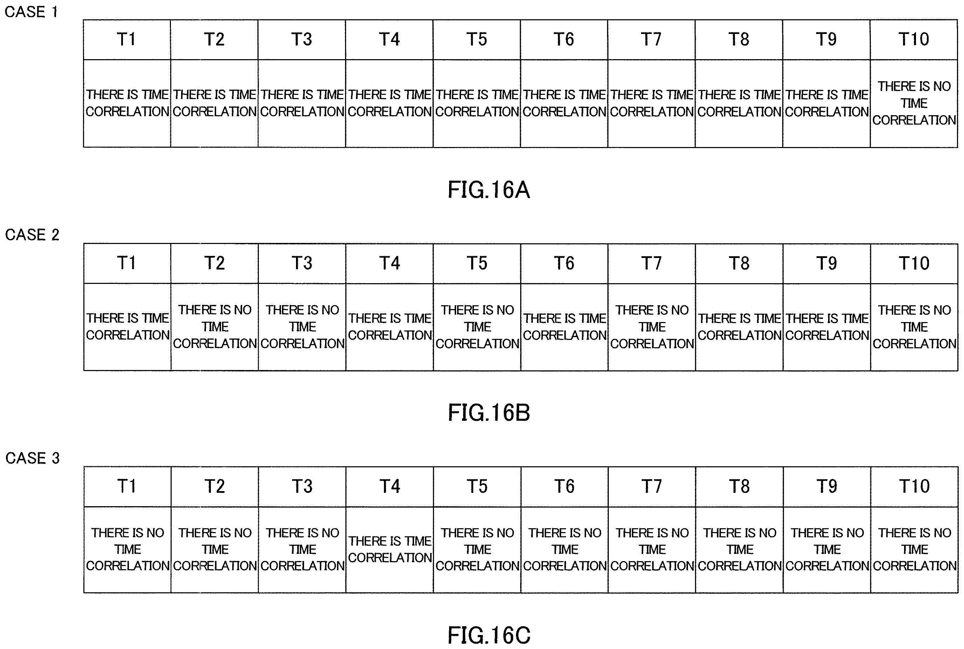

Now, a case of transmitting information that relates to fading frequencies that are measured (estimated) at a plurality of times from a user terminal UE to a small base station SeNB will be described in detail with reference to FIG. 15 and 16. Note that although an example will be described below, in which the information related to fading frequencies is time correlation information to represent that "there is a time correlation/there is no time correlation," as noted earlier, this may be the fading frequencies themselves, or may be time correlation information to represent that "the inner product value between channel estimation values is large/small."

In FIG. 15, a plurality of pieces of time correlation information measured at a plurality of times in the past at predetermined time intervals are transmitted from the user terminal UE as information related to fading frequencies. For example, in FIG. 15, pieces of time correlation information (ten pieces of time correlation information) measured at ten times at 40-msec time intervals (time T1, T2, T3, T4, ... and T10) are transmitted from the user terminal UE to the small base station SeNB at a time Ta.

Note that, although ten pieces of time correlation information from the past are reported in FIG. 15, this is only an example, and it is equally possible, instead, to report a number of pieces of time correlation information other than ten -- for example, four or eight pieces time correlation information. Also, in FIG. 15, the measurement at each time (at each time T1, T2, T3, ... and T10) may derive an instantaneous (for example, 1 msec) measurement result at the present time, or may derive a measurement result of the period (here, 40 msec) from the previous time to the present time. Also, although there are 40-msec time intervals between the times where time correlation information is measured (acquired) in FIG. 15, it is equally possible to report a plurality of pieces of time correlation information that are measured (acquired) at time intervals other than 40 msec (for example, 200 msec so on), from the user terminal UE to the small base station SeNB.

By reporting information that relates to a plurality of pieces of time correlation information from a plurality of times as information related to fading frequencies, there is an advantage that it is possible to know, in the small base station SeNB, the accuracy of information reported from the user terminal UE, in addition to the fading frequency at each time and time correlation information.

The above advantage will be described in detail with reference to FIG. 16. FIG. 16 shows examples of time correlation information which represents that "there is a time correlation/there is no time correlation" at ten times T1 to T10 at predetermined time (for example, 200 msec) intervals. For example, when, as shown in FIG. 16A, nine pieces of time correlation information out of ten pieces of time correlation information show that "there is a time correlation," the small base station SeNB can decide that the accuracy of the information "there is a time correlation" is high (case 1).

Alternatively, when, as shown in FIG. 16B, five pieces of time correlation information out of ten pieces of time correlation information show that "there is a time correlation" and the other five pieces of time correlation information show that "there is no time correlation," the small base station SeNB can decide that the accuracy of the information "there is a time correlation" or "there is no time correlation" is low (case 2).

Alternatively, when, as shown in FIG. 16C, nine pieces of time correlation information out of ten pieces of time correlation information show that "there is no time correlation," the small base station SeNB can decide that the accuracy of the information "there is no time correlation" is high (case 3).

As described above, when time correlation information at a plurality of times is reported from a user terminal UE, the small base station SeNB can decide the accuracy of the information reported from the user terminal UE based on the content of the time correlation information reported.

Also, the small base station SeNB may estimate the speed of the movement of the user terminal UE more accurately by using time correlation information at a plurality of times. That is, the small base station SeNB may decide that the speed of movement is low in above case 1, that the speed of movement is medium in above case 2, and that the speed of movement is high in above case 3.

Note that, although FIG. 16 shows examples pertaining to time correlation information that shows "there is a time correlation/there is no time correlation," it is equally possible, instead of this, to report, as ten measurement results, the fading frequencies themselves, and allow the small base station SeNB to decide the accuracy of information that is reported and determine the speed of movement more accurately based on these.

Also, it is equally possible to report information that relates to the fading frequencies at a plurality of times from the user terminal UE to the macro base station MeNB. In this case, it is possible to decide the accuracy of information that is reported, and determine the speed of movement more accurately, in the macro base station MeNB.

Also, with the fading frequency estimation method according to the first example, information that relates to fading frequency (fading frequency, time correlation information and so on) at one time or at a plurality of times may be reported to the small base station SeNB as a higher layer (for example, RRC layer, MAC layer and so on) control signal, as noted earlier.

For example, when a measurement report, which is an RRC layer control signal, is used, information that relates to fading frequency at one time or at a plurality of times may be reported from one information item in the measurement report. Note that the measurement report may be either a measurement report that is transmitted from the user terminal UE periodically (hereinafter abbreviated as a "periodic measurement report") or a measurement report (hereinafter abbreviated as an "event-triggered measurement report") that is transmitted from the user terminal UE when triggered by a certain event. Note that the event-triggered measurement report may be referred to as an "aperiodic measurement report."

The event-triggered measurement report here may be, for example, measurement report for event A3 or event A4 described in 3GPP TS 36.331, or may be a measurement report for events A1, A2 and A5 described in 3GPP TS 36.331. To be more specific, in "MeasResults," described in 3GPP TS 36.331, information that relates to the fading frequency at one time or a plurality of times may be included.

The information that is reported in the above-described periodic measurement report or event-triggered measurement report (for example, measurement report based on events A1, A2, A3, A4 and A5) is used to determine whether or not execute mobility control with respect to handovers and so on, in the small base station SeNB. Consequently, when information that relates to the fading frequency at one time or at a plurality of times is included in the above measurement report, this is advantageous from the perspective of executing mobility control more adequately.

(Second Example)

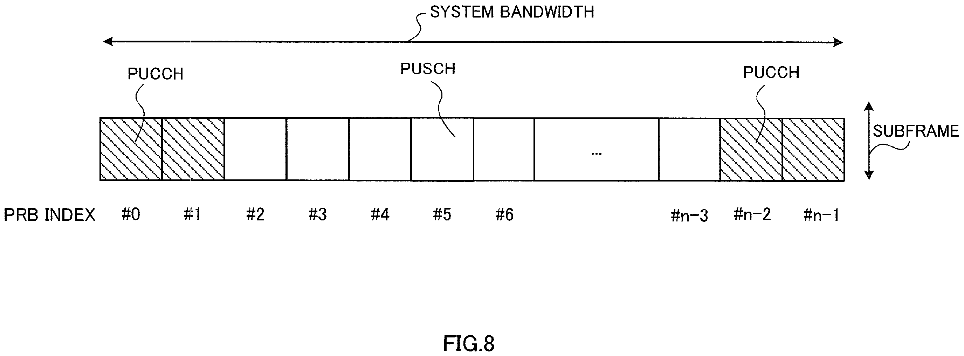

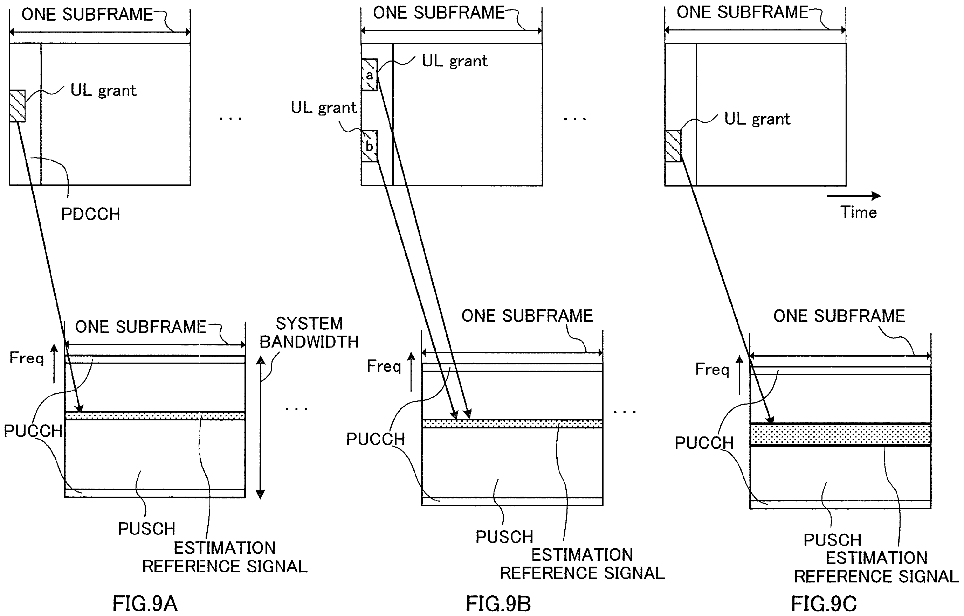

The fading frequency estimation method according to a second example of the present invention will be described with reference to FIG. 8 and FIG. 9. The fading frequency estimation method according to the second example is different from the first example, which estimates fading frequency on the user terminal UE side, in estimating fading frequency on the small base station SeNB side. Differences from the first example will be primarily described below.

With the fading frequency estimation method according to the second example, a user terminal UE in a small cell S receives allocation information of the radio resources for the PUSCH (uplink shared data channel) (hereinafter referred to as "PUSCH resources"). Also, the user terminal UE arranges the estimation reference signals using an arrangement format (hereinafter referred to as "estimation format"), in which the estimation reference signals are arranged in a relatively high density, in at least part of the PUSCH resources. Also, the small base station SeNB estimates fading frequency based on the channel estimation values of the estimation reference signals.

Now, the estimation reference signals here refer to reference signals that are used to estimate the fading frequency in the small base station SeNB. For the estimation reference signals, one of DM-RSs (DeModulation Reference Signals), SRSs (Sounding Reference Signals) and new reference signals that are known at the small base station SeNB and the user terminal UE may be used, or combinations of these reference signals, may be used.

Also, the estimation format is an arrangement format (mapping pattern), in which the above estimation reference signals are arranged in a relatively high density. For example, in the estimation format, the estimation reference signals may be arranged in all the resource elements in a PRB pair. Note that, in the estimation format, as long as the density of the estimation reference signals is relatively high, the estimation reference signals need not be arranged in all the resource elements in a PRB pair. It is equally possible to arrange the estimation reference signals such that the estimation reference signals are distributed in the time/frequency direction in a PRB pair.

Also, the PDSCH resources are radio resources that are allocated for the PUSCH. PUSCH resources are radio resources provided along the time/frequency direction, such as, for example, physical resource blocks (PRBs), PRB pairs formed with two PRBs that are continuous in the time direction, resource block groups (RBG) formed with a plurality of PRBs and so on. PUSCH resources are allocated to user terminals UE in accordance with, for example, the scheduling result of each subframe (1 ms).

FIG. 8 is diagram to explain an example of PUSCH resources. In FIG. 8, PUSCH resources are allocated in PRB pair units, but this is by no means limiting. In FIG. 8, the PUSCH resources are the PRB pairs other than PRB pairs #0, #1, #n-2 and #n-1, which are for the uplink control channel (PUCCH: Physical Uplink Control Channel) that is arranged at both ends of the system bandwidth.

With the fading frequency estimation method according to the second example, a user terminal UE may arrange the estimation reference signal in all of the PUSCH resources (for example, in FIG. 8, PRB pairs #2 to #n-3) by using the above-described estimation format.

Alternatively, the user terminal UE may arrange the estimation reference signals using the above-described estimation format in part of the PUSCH resources. In particular, the user terminal UE may arrange estimation reference signal by using the above-described estimation format in the PUSCH resources at both ends of the system bandwidth (for example, in FIG. 8, PRB pairs #2 and #n-3). By using the estimation format in the PUSCH resource at both ends of the system bandwidth, it is possible to achieve a frequency diversity effect (diversity gain) with respect to the estimation reference signals.

Also, in the fading frequency estimation method according to the second example, a user terminal UE dynamically controls the PUSCH resources where the estimation reference signals to use the estimation format are arranged. Examples of this dynamic control will be described with reference to FIG. 9.

FIG. 9 provides diagrams to explain examples of dynamic control using allocation information of PUSCH resources. The allocation information of PUSCH resources (hereinafter referred to as "PUSCH allocation information") may be transmitted in the PDCCH as shown in FIG. 9A to FIG. 9C, or may be transmitted in the EPDCCH that is frequency division multiplexed with the PDSCH. Note that the PUSCH allocation information may be referred to as uplink assignments (UL Assignment) such as DCI formats 0 and 4, uplink scheduling information, uplink grants (UL grants) and so on.

In FIG. 9A, the PUSCH resources where the estimation reference signals are arranged using the estimation format are designated by using PUSCH allocation information. This PUSCH allocation information may contain trigger information that indicates that the estimation format is used. For example, the trigger information may be a combination of bit fields other than the "resource allocation field" contained in the DCI format, or may be a bit field that is newly added.

Also, the small base station SeNB may report the number of consecutive subframes where the estimation format is used, to the user terminal UE, by using PUSCH allocation information. In this case, the user terminal UE may transmit the estimation format with the same transmission power in the consecutive subframes. Generally speaking, when the transmission power of uplink transmission signals varies, cases might occur where the phase of the transmission signals also varies in accordance with that, and therefore it is preferable not to allow this fluctuation of transmission power in order to carry out the above-described estimation of fading frequency accurately.

Also, since it is not necessary to change (or control) transmission power, it is possible to reduce the overhead of the information bits for reporting the above number of consecutive subframes, by reporting the number of consecutive subframes by using the TPC field that is originally meant for use for transmission power control. Note that the number of consecutive subframes may be reported to the small base station SeNB by using higher layer signaling as well.

In FIG. 9B, the same PUSCH resource where the estimation reference signal is arranged using the estimation format is designated by using PUSCH allocation information (a, b) for different user terminals UE. In this case, estimation reference signals from a plurality of user terminals UE may be multiplexed upon the same PUSCH resource.

As for the method of multiplexing estimation reference signals from a plurality of user terminals UE, it is possible to use code division multiplexing (CDM), time division multiplexing (TDM), frequency division multiplexing (FDM), space division multiplexing (SDM), cyclic shifting and so on. Meanwhile, FDM, SDM and cyclic shifting are preferable in order to improve the accuracy of fading frequency estimation. This is because time resources need not be used in the multiplexing.

Note that the multiplexing positions in the above multiplexing methods (codes for CDM, weights for SDM, codes for cyclic shifting and so on) may be reported to the user terminal UE by using the above-described PUSCH allocation information, or may be reported to the user terminal UE by using higher layer signaling.

In FIG. 9C, the PUSCH resources where the estimation reference signals are arranged using the estimation format are increased in the frequency direction by using PUSCH allocation information. That is, the number of PRB pairs is increased. By this means, it is possible to dynamically change the PUSCH resources where the estimation format is used, in the frequency direction.

Note that the trigger information contained in the PUSCH allocation information of FIG. 9 may be a trigger field including trigger bits for a plurality of user terminals UE, as has been described above with reference to FIG. 7. The trigger field to contain the trigger bits may be included in the PUSCH allocation information or may be added. Each trigger bit is set to "1" or "0" depending on whether the estimation format is used with respect to the corresponding user terminal UE.

In this case, the small base station SeNB may report to each user terminal, by using higher layer signaling, at least one of position information of the trigger bit for that user terminal in the trigger field, information about the PUSCH resources where the estimation format is used (for example, the PRB indices and so on), and information for identifying the type of downlink control information (DCI) including PUSCH allocation information (for example, RNTIs (Radio Network Temporary Identifiers) and so on).

With the above-described fading frequency estimation method according to the second example, a user terminal UE arranges estimation reference signals by using an estimation format, in which the estimation reference signals are arranged in a relatively high density, in part of the PUSCH resources. Consequently, it is possible to prevent the decrease of the accuracy of fading frequency estimation in the small base station SeNB.

Also, by designating the PUSCH resources where the estimation format is used by using PUSCH allocation information, it is possible to configure the time to transmit and the frequency to transmit the estimation reference signals, in a flexible manner. Consequently, it is possible to prevent the increase of overhead by the transmission of the estimation reference signals.

Also, by designating the PUSCH resources where the estimation format is used by using PUSCH allocation information, it is possible to dynamically control the time interval and frequency bandwidth to transmit the estimation reference signals using the estimation format. As a result of this, the user terminal UE can perform channel estimation by selecting the time interval or the frequency bandwidth of the estimation reference signals flexibly, and improve the accuracy of the estimation of fading frequency.

Also, since fading frequency can be estimated in the small base station SeNB, it is possible to simplify the terminal structure of user terminals UE, and prevent the power consumption in the user terminals UE from increasing.

Note that, in other embodiments, instead of the small base station SeNB, the macro base station MeNB may estimate fading frequency. That is, a user terminal UE in the macro cell M may receive allocation information about the radio resources for the PUSCH (uplink shared data channel), and arrange the estimation reference signals using an estimation format in at least part of the PUSCH resources, and the macro base station MeNB may estimate fading frequency based on the channel estimation values of the estimation reference signals.

As has been described above, from the perspective of controlling a user terminal UE to communicate via a macro cell M, not via a small cell S, when the speed of the movement of the user terminal UE is high, it is preferable to be able to estimate the speed of the movement of the user terminal UE while the user terminal UE is communicating via the macro cell M. Consequently, by estimating the speed of the movement of the user terminal UE while the user terminal UE is communicating with the macro base station MeNB, it is possible to execute the above control more efficiently.

(Structure of Radio Communication System)

Now, the radio communication system according to the present embodiment will be described below in detail. In this radio communication system, the above-described fading frequency estimation methods of the first and second examples are employed.

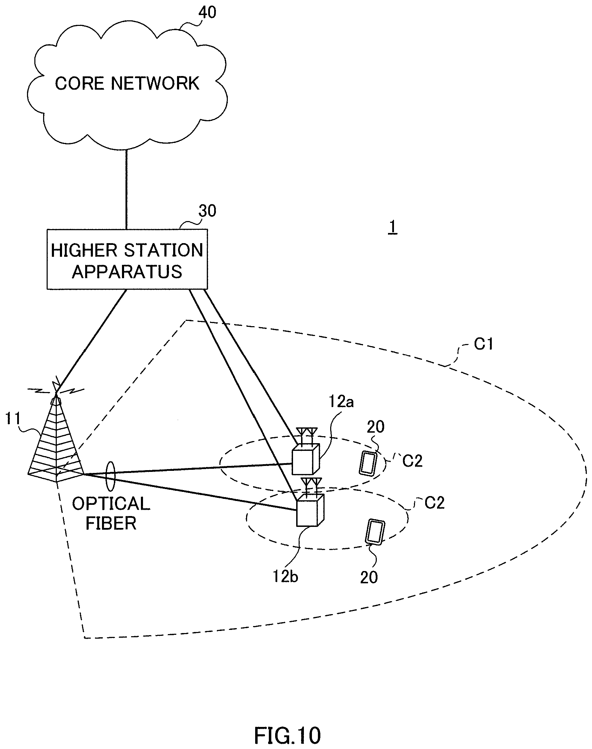

FIG. 10 is a schematic configuration diagram of the radio communication system according to the present embodiment. Note that the radio communication system shown in FIG. 10 is a system to accommodate, for example, the LTE system or SUPER 3G. This radio communication system adopts carrier aggregation to group a plurality of fundamental frequency blocks (component carriers) into one, where the system band of the LTE system constitutes one unit. Also, this radio communication system may be referred to as "IMT-advanced," or may be referred to as "4G" or "FRA (Future Radio Access)."

As shown in FIG. 10, a radio communication system 1 includes a macro base station 11 that forms a macro cell C1, and small base stations 12a and 12b that form small cells C2, which are placed inside the macro cell C1 and which are narrower than the macro cell C1. Also, in the macro cell C1 and in each small cell C2, user terminals 20 are placed. The user terminals 20 are configured to be able to perform radio communication with both the macro base station 11 and the small base stations 12.

Communication between the user terminals 20 and the macro base station 11 is carried out using a carrier of a relatively low frequency band (for example, 2 GHz) and a wide bandwidth (referred to as "conventional carrier," "legacy carrier" and so on). Meanwhile, although a carrier of a relatively high frequency band (for example, 3.5 GHz and so on) and a narrow bandwidth is used between the user terminals 20 and the small base stations 12, the same carrier as that used between the user terminals 20 and the macro base station 11 may be used as well. The macro base station 11 and each small base station 12 are connected by wire connection or by wireless connection.

The macro base station 11 and the small base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these.

Note that the macro base station 11 is a radio base station having a relatively wide coverage, and may be referred to as an "eNodeB," a "radio base station apparatus," a "transmission point" and so on. Also, the small base stations 12 are radio base stations having local coverages, and may be referred to as "pico base stations," "femto base stations," "Home eNodeBs," "micro base stations," "transmission points" and so on. Furthermore, the small base stations 12 may be radio base stations to form phantom cells. In a phantom cell, a subframe, in which the PDCCH is not arranged in maximum three OFDM symbols at the top, is used (new carrier type, additional carrier type and so on).

The macro base station 11 and the small base stations 12 will be collectively referred to as "radio base stations 10," unless distinction needs to be drawn. The user terminals 20 are terminals to support various communication schemes such as LTE, LTE-A and so on, and may be both mobile communication terminals and fixed communication terminals.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to reduce interference between terminals by dividing the system band into bands formed with one or continuous resource blocks, per terminal, and allowing a plurality of terminals to use mutually different bands.

Here, communication channels to be used in the radio communication system shown in FIG. 10 will be described. Downlink communication channels include a PDSCH (Physical Downlink Shared Channel), which is used by each user terminal 20 on a shared basis, and downlink L1/L2 control channels (PDCCH, PCFICH, PHICH and EPDCCH). User data and higher control information are transmitted by the PDSCH. Scheduling information for the PDSCH and the PUSCH and so on are transmitted by the PDCCH (Physical Downlink Control Channel). The number of OFDM symbols to use for the PDCCH is transmitted by the PCFICH (Physical Control Format Indicator Channel). HARQ ACK and NACK for the PUSCH are transmitted by the PHICH (Physical Hybrid-ARQ Indicator Channel). Also, the scheduling information for the PDSCH and the PUSCH and so on may be transmitted by the EPDCCH (Enhanced Physical Downlink Control Channel, also referred to as an "ePDCCH," an "E-PDCCH," an "FDM-type PDCCH" and so on) as well. This enhanced PDCCH (enhanced downlink control channel) is frequency-division-multiplexed with the PDSCH (downlink shared data channel).

Uplink control channels include the PUSCH (Physical Uplink Shared Channel), which is used by each user terminal 20 on a shared basis as an uplink data channel, and the PUCCH (Physical Uplink Control Channel), which is an uplink control channel. User data and higher control information are transmitted by this PUSCH. Also, by means of the PUCCH, downlink radio quality information (CQI: Channel Quality Indicator), ACK/NACK and so on are transmitted.

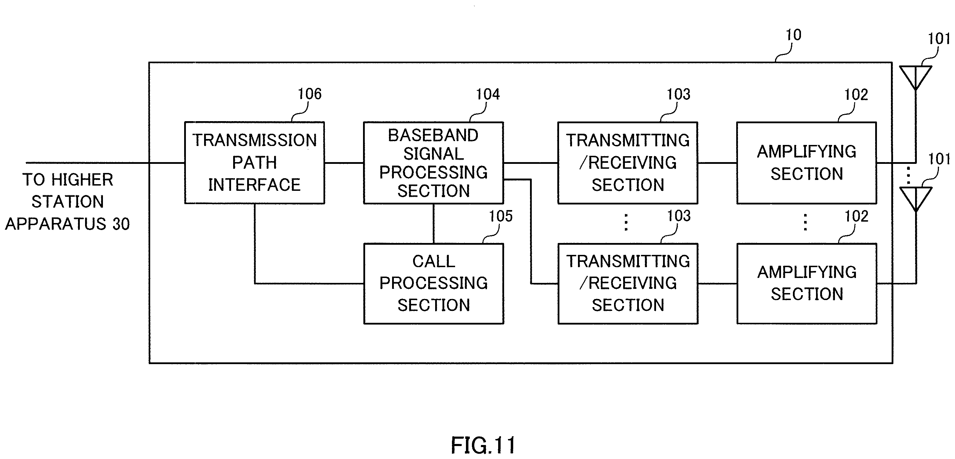

FIG. 11 is a diagram to show an overall structure of a radio base station 10 (which may be either a macro base station 11 or a small base station 12) according to the present embodiment. The radio base station 10 has a plurality of transmitting/receiving antennas 101 for MIMO transmission, amplifying sections 102, transmitting/receiving sections 103 (transmitting sections and receiving sections), a baseband signal processing section 104, a call processing section 105, and a transmission path interface 106.

User data to be transmitted from the radio base station 10 to a user terminal 20 on the downlink is input from the higher station apparatus 30, into the baseband signal processing section 104, via the transmission path interface 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is transferred to each transmitting/receiving section 103. Furthermore, downlink control signals are also subjected to transmission processes such as channel coding and an inverse fast Fourier transform, and are transferred to each transmitting/receiving section 103.

Each transmitting/receiving section 103 converts the downlink signals, which are pre-coded and output from the baseband signal processing section 104 on a per antenna basis, into a radio frequency band. The amplifying sections 102 amplify the radio frequency signals having been subjected to frequency conversion, and transmit the results through the transmitting/receiving antennas 101.

On the other hand, as for uplink signals, the radio frequency signals that are received in the transmitting/receiving antennas 101 are each amplified in the amplifying sections 102, converted into baseband signals through frequency conversion in each transmitting/receiving section 103, and input in the baseband signal processing section 104.

In the baseband signal processing section 104, the user data that is included in the input uplink signals is subjected to an FFT process, an IDFT process, error correction decoding, a MAC retransmission control receiving process, and RLC layer and PDCP layer receiving processes, and the result is transferred to the higher station apparatus 30 via the transmission path interface 106. The call processing section 105 performs call processing such as setting up and releasing communication channels, manages the state of the radio base station 10 and manages the radio resources.

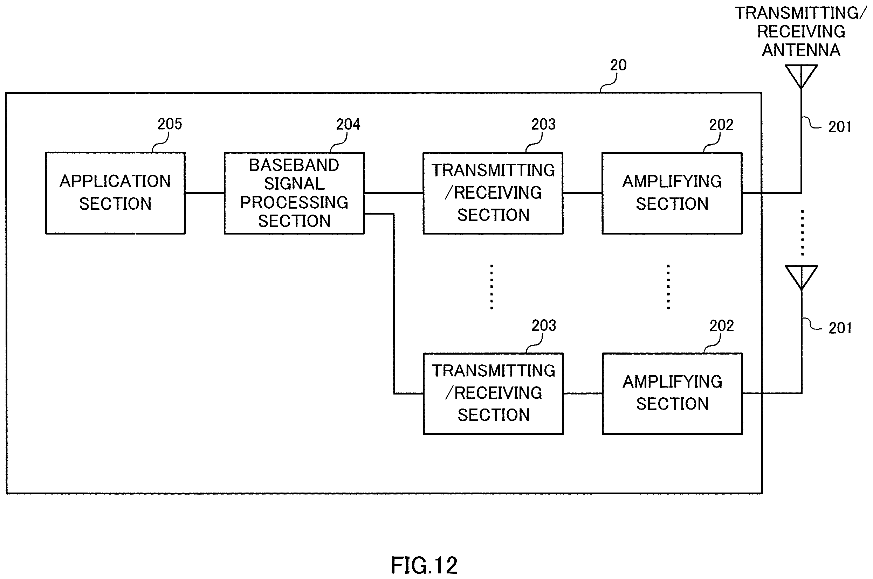

FIG. 12 is a diagram to show an overall structure of a user terminal 20 according to the present embodiment. The user terminal 20 has a plurality of transmitting/receiving antennas 201 for MIMO transmission, amplifying sections 202, transmitting/receiving sections 203 (transmitting sections and receiving section), a baseband signal processing section 204, and an application section 205.

As for downlink signals, radio frequency signals that are received in the plurality of transmitting/receiving antennas 201 are each amplified in the amplifying sections 202, subjected to frequency conversion in the transmitting/receiving sections 203, and input in the baseband signal processing section 204. In the baseband signal processing section 204, an FFT process, error correction decoding, a retransmission control receiving process and so on are performed. The user data that in included in the downlink signals is transferred to the application section 205. The application section 205 performs processes related to higher layers above the physical layer and the MAC layer.

Also, in the downlink data, broadcast information is also transferred to the application section 205.

Meanwhile, uplink user data is input from the application section 205 to the baseband signal processing section 204. In the baseband signal processing section 204, a retransmission control (H-ARQ (Hybrid ARQ)) transmission process, channel coding, precoding, a DFT process, an IFFT process and so on are performed, and the result is transferred to each transmitting/receiving section 203. Baseband signals that are output from the baseband signal processing section 204 are converted into a radio frequency band in the transmitting/receiving sections 203. After that, the amplifying sections 202 amplify the radio frequency signals having been subjected to frequency conversion, and transmit the results from the transmitting/receiving antennas 201.

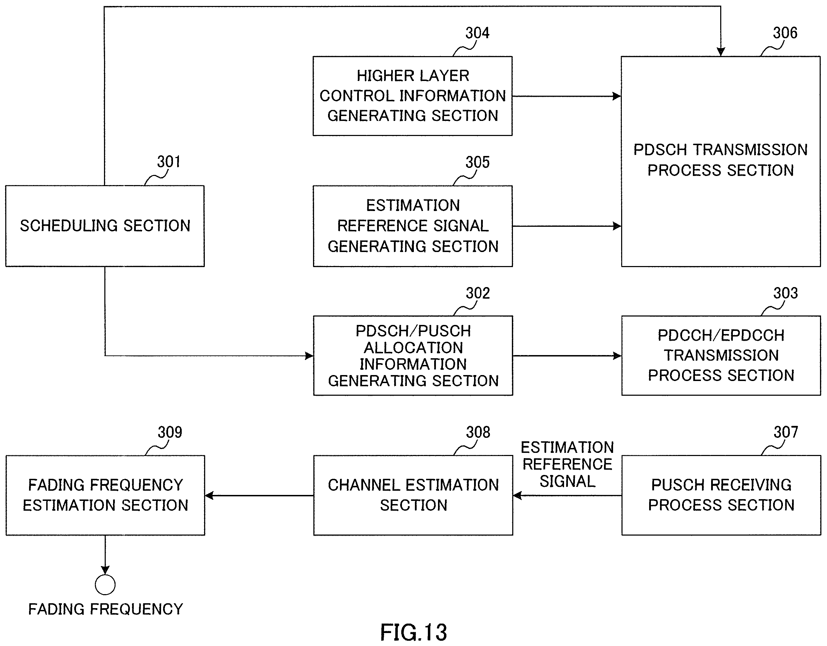

FIG. 13 is a functional structure diagram of the baseband signal processing section 104 provided in the radio base station 10 according to the present embodiment.

As shown in FIG. 13, the radio base station 10 has a scheduling section 301, a PDSCH/PUSCH allocation information generating section 302, a PDCCH/EPDCCH transmission process section 303, a higher layer control information generating section 304, an estimation reference signal generating section 305, a PDSCH transmission process section 306, a PUSCH receiving process section 307, a channel estimation section 308 and a fading frequency estimation section 309.

Note that, when fading frequency is estimated on the user terminal 20 side (first example), the channel estimation section 308 and the fading frequency estimation section 309 may be omitted. On the other hand, when fading frequency is estimated on the radio base station 10 side (second example), the estimation reference signal generating section 305 may be omitted.

The scheduling section 301 schedules the PDSCH/PUSCH. To be more specific, the scheduling section 301 controls the allocation of the radio resources for the PDSCH/PUSCH (PDSCH resources/PUSCH resources) based on feedback information (for example, CQI and so on) from the user terminal 20.

The PDSCH/PUSCH allocation information generating section 302 generates PDSCH allocation information and PUSCH allocation information in accordance with the scheduling results in the scheduling section 301. As has been described above, the PDSCH allocation information may contain trigger information that indicates that the estimation format is used, the number of consecutive subframes where the estimation format is used, and so on. Also, the allocation PUSCH allocation information may contain trigger information that indicates that the estimation format is used, and the multiplexing position to be used when estimation signals from a plurality of user terminals UE are multiplexed over the same PUSCH resource (code in the event of CDM, weight in the event of SDM, code in the event of cyclic shifting and so on).

The PDCCH/EPDCCH transmission process section 303 performs PDCCH or EPDCCH transmission processes. To be more specific, the PDCCH/EPDCCH transmission process section 303 maps the PDSCH allocation information and PUSCH allocation information input from the PDSCH/PUSCH allocation information generating section 302 to predetermined allocation units (for example, CCEs, REGs, eCCEs, eREGs and so on), and performs transmission processes such as channel coding, modulation, IFFT and so on. The PDCCH/EPDCCH transmission process section 303 outputs the signal after the transmission processes to the transmitting/receiving section 103.

The higher layer control information generating section 304 generates higher layer control information. The higher layer control information refers to control information that is transmitted by higher layer signaling (for example, RRC signaling and MAC signaling). The higher layer control information may contain the above estimation format or the number of consecutive subframes in which the estimation format is used.

The estimation reference signal generating s section 305 generates estimation reference signals for the fading frequency in the user terminal 20. As has been described above, for the estimation reference signals, for example, one of DM-RSs (DeModulation Reference Signals), CSI-RSs (measurement reference signals), CRS (Cell-specific Reference Signals) and new reference signals that are known at the radio base station 10 and the user terminal UE may be used, or combinations of these reference signals may be used.

The PDSCH transmission process section 306 performs PDSCH transmission processes. To be more specific, the PDSCH transmission process section 306 maps the higher layer control information and user data input from the higher layer control information 304 to the PDSCH resources (for example, PRB pairs, PRBs, RBGs (Resource Block Groups) and so on) allocated from the scheduling section 301, and performs transmission processes such as channel coding, modulation, IFFT and so on. The PDSCH transmission process section 306 outputs the signals after the transmission processes to the transmitting/receiving sections 103.

Also, the PDSCH transmission process section 306 (arrangement section) may map (arrange) the estimation reference signals to the PDSCH resources using an estimation format in which the estimation reference signals are arranged in a relatively high density. Here, the PDSCH transmission process section 306 may use the above estimation format in all of the PDSCH resources, or may use the above estimation format in part of the PDSCH resources.

The PUSCH receiving process section 307 performs PUSCH receiving processes. To be more specific, the PUSCH receiving process section 307 performs the receiving processes of received signals that are input from the transmitting/receiving sections 103, including an FFT, demodulation and decoding. When the user terminal 20 estimates fading frequency (first example), the PUSCH receiving process section 307 acquires the fading frequency estimated in the user terminal 20, or acquires information related to the fading frequency (representing, for example, "there is a time correlation/there is no time correlation," "the inner product value between channels estimation values is large/small," or other metrics to represent correlation in time).

On the other hand, when the radio base station 10 estimates fading frequency (second example), the PUSCH receiving process section 307 outputs the estimation reference signals separated from the received signals to the channel estimation section 308. The channel estimation section 308 performs channel estimation with respect to the estimation reference signals at predetermined time intervals, input from the PUSCH receiving process section 307, and outputs the channel estimation values at predetermined time intervals to the fading frequency estimation section 309. The fading frequency estimation section 309 estimate fading frequency based on the time correlation between the channel estimation values at predetermined time intervals.

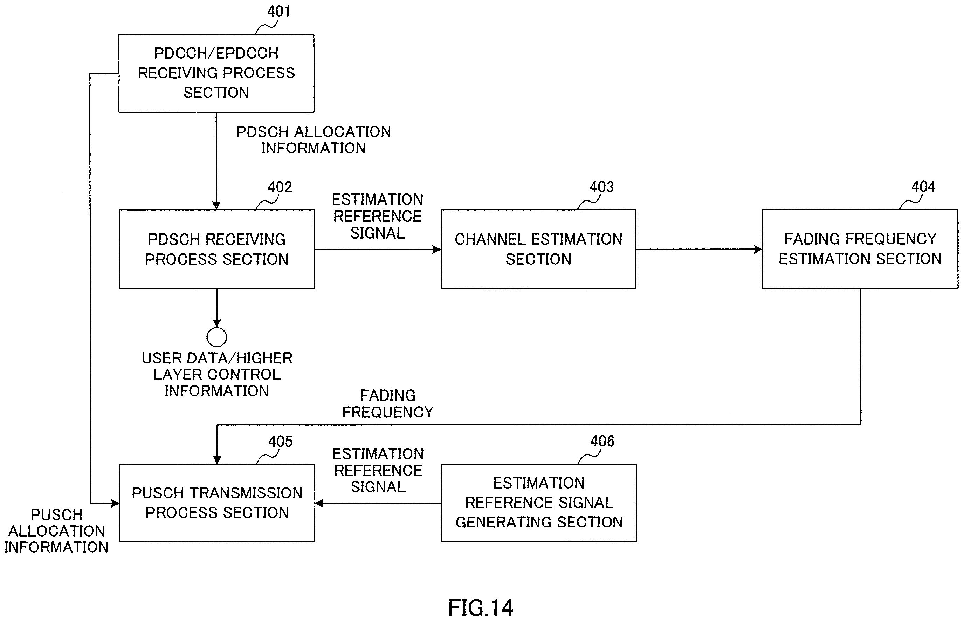

FIG. 14 is a functional structure diagram of the baseband signal processing section 204 provided in a user terminal 20 according to the present embodiment.

As shown in FIG. 14, the user terminal 20 has a PDCCH/EPDCCH receiving process section 401, a PDSCH receiving process section 402, a channel estimation section 403, a fading frequency estimation section 404, a PUSCH transmission process section 405, and an estimation reference signal generating section 406.

Note that, when fading frequency is estimated on the user terminal 20 side (first example), the estimation reference signal generating s section 406 may be omitted. On the other hand, when fading frequency is estimated on the radio base station 10 side (second example), the fading frequency estimation section 404 may be omitted.

The PDCCH/EPDCCH receiving process section 401 performs PDCCH/EPDCCH receiving processes. To be more specific, the PDCCH/EPDCCH receiving process section 401 performs receiving processes of received signals input from the transmitting/receiving section 203, including an FFT, demodulation and search space blind decoding, and acquires the PDSCH allocation information and PUSCH allocation information.

The PDSCH receiving process section 402 performs receiving process of the PDSCH. To be more specific, the PDSCH receiving process section 402 performs receiving processes of received signals input from the transmitting/receiving section 20, including an FFT, demodulation and decoding. Also, the PDSCH receiving process section 402 acquires the user data and higher layer control information for the subject user terminal based on the PDSCH allocation information input from the PDCCH/EPDCCH receiving process section 401.

When the user terminal 20 estimates fading frequency (first example), the PUSCH receiving process section 307 outputs the estimation reference signals to the channel estimation section 403. The channel estimation section 403 performs channel estimation with respect to the estimation reference signals at predetermined time intervals that are input from the PDSCH receiving process section 402, and outputs the channel estimation values at predetermined time intervals to the fading frequency estimation section 404. The fading frequency estimation section 404 estimates fading frequency based on the time correlation between the channel estimation values at predetermined time intervals, and outputs this to the PUSCH transmission process section 405.

The PUSCH transmission process section 405 performs PUSCH transmission processes. To be more specific, the PUSCH transmission process section 405 maps the higher layer control information and user data to the PUSCH resources (for example, PRB pairs, PRBs, RBGs (Resource Block Groups) and so on) designated by the PUSCH allocation information input from the PDCCH/EPDCCH receiving process section 401, and performs transmission processes such as channel coding, modulation, an IFFT and so on. The PUSCH transmission process section 405 outputs the signals after the transmission processes to the transmitting/receiving sections 203.

Also, the PUSCH transmission process section 405 (arrangement section) may map (arrange) the estimation reference signal to the PUSCH resources by using an estimation format in which the estimation reference signals are arranged in a relatively high density. Here, the PUSCH transmission process section 405 may use the above estimation format in all of the PUSCH resources, or may use the above estimation format in part of the PUSCH resources.

The estimation reference signal generating section 406 generates the estimation reference signals for the fading frequency in the radio base station 10. As has been described above, for the estimation reference signals, for example, one of DM-RSs (DeModulation Reference Signals), SRSs (Sounding Reference Signals) and new reference signals that are known at the radio base station 10 and the user terminal UE may be used, or combinations of these reference signals may be used.

As has been described above, according to the radio communication system 1 of the present embodiment, the small base stations 12 arrange estimation reference signals by using an estimation format, in which the estimation reference signals are arranged in a relatively high density, in at least part of the PDSCH resources (first example). Consequently, it is possible to prevent the decrease of the accuracy of fading frequency estimation in user terminals 20 in the small cells C2.

Alternatively, according to the radio communication system 1 of the present embodiment, the macro base station 11 arranges estimation reference signals by using an estimation format, in which the estimation reference signals are arranged in a relatively high density, in at least part of the PDSCH resources (first example). Consequently, it is possible to prevent the decrease of the accuracy of fading frequency estimation in user terminals 20 in the macro cell C1.

Also, according to the radio communication system 1 of the present embodiment, user terminals 20 in the small cells C2 arrange estimation reference signals by using an estimation format, in which the estimation reference signals are arranged in a relatively high density, in at least part of the PUSCH resources (second example). Consequently, it is possible to prevent the decrease of the accuracy of fading frequency estimation in the small base stations 12.

Alternatively, according to the radio communication system 1 of the present embodiment, user terminals 20 in the macro cell C1 arrange estimation reference signals by using an estimation format, in which the estimation reference signals are arranged in a relatively high density, in at least part of the PUSCH resources (second example). Consequently, it is possible to prevent the decrease of the accuracy of fading frequency estimation in the macro base station 11.

Note that, although examples have been described above with respect to a next-generation mobile communication system in which macro cells and small cells are arranged to overlap each other at least in part, it is equally possible to carry out the above fading frequency estimation in a system in which macro cells alone are arranged or in which small cells alone are arranged.

Also, although a system has been described with reference to FIG. 10 in which carrier aggregation is executed, it is equally possible to carry out the above fading frequency estimation in a system in which carrier aggregation is not executed.

Now, although the present invention has been described in detail with reference to the above embodiment, it should be obvious to a person skilled in the art that the present invention is by no means limited to the embodiment described herein. The present invention can be implemented with various corrections and in various modifications, without departing from the scope of the present invention defined by the recitations of the claims. Consequently, the descriptions herein are provided only for the purpose of explaining examples, and should by no means be construed to limit the present invention in any way.

**Claims**

1. A radio base station that communicates with a user terminal, comprising:

   an arrangement section (306) that arranges a reference signal, using an arrangement format, in which the reference signal, which is used to estimate fading frequency in the user terminal, is arranged in at least part of radio resources allocated for a downlink shared data channel; and
   a transmission section (303) that transmits allocation information of the radio resources for the downlink shared data channel to the user terminal, **characterized by** the fact that in the arrangement format the reference signal is arranged in all the resource elements in a PRB, Physical Resource Block, pair.

2. The radio base station according to claim 1,
   further comprising a receiving section (103) that receives information to show the fading frequency estimated by using the reference signal, from the user terminal.

3. The radio base station according to claim 1 or claim 2, wherein the transmission section transmits the number of consecutive subframes where the arrangement format is used, by using the allocation information or higher layer signaling.

4. The radio base station according to claim 1,
   wherein the reference signal is at least one of a cell-specific reference signal, CRS, a demodulation reference signal (DM-RS) and a measurement reference signal, CSI-RS.

5. A user terminal that communicates with a radio base station, comprising:

   a receiving section (401) that receives allocation information of radio resources for an uplink shared data channel; and
   an arrangement section (405) that arranges a reference signal, using an arrangement format, in which the reference signal, which is used to estimate fading frequency in the radio base station, is arranged in at least part of the radio resources allocated for the uplink shared data channel, **characterized by** the fact that in the arrangement format the reference signal is arranged in all the resource elements in a PRB, Physical Resource Block, pair.

6. The user terminal according to claim 5, further comprising a transmission section (203) that transmits the number of consecutive subframes where the arrangement format is used, by using an uplink control channel or higher layer signaling.

7. The user terminal according to claim 5 or claim 6, wherein the reference signal is at least one of a demodulation reference signal, DM RS, and a sounding reference signal, SRS.

8. A fading frequency estimation method for estimating fading frequency in a user terminal that communicates with a radio base station, the fading frequency estimation method comprising the steps in which:
the radio base station:

arranges a reference signal, using an arrangement format, in which the reference signal, which is used to estimate fading frequency in the user terminal, is arranged in at least part of radio resources allocated for a downlink shared data channel; and
transmits allocation information of the radio resources for the downlink shared data channel to the user terminal; and
the user terminal:

estimates the fading frequency based on a channel estimation value of the reference signal; and
transmits the estimated fading frequency to the radio base station in response to a transmission request from the radio base station, **characterized by** the fact that in the arrangement format the reference signal is arranged in all the resource elements in a PRB, Physical Resource Block, pair.

9. A fading frequency estimation method for estimating fading frequency in a radio base station that communicates with a user terminal, the fading frequency estimation method comprising the steps in which:
the user terminal:

receives allocation information of radio resources for an uplink shared data channel; and
arranges a reference signal, using an arrangement format, in which the reference signal, which is used to estimate fading frequency in the radio base station, is arranged in at least part of the radio resources allocated for the uplink shared data channel; and
the radio base station estimates the fading frequency based on a channel estimation values of the reference signal, **characterized by** the fact that in the arrangement format the reference signal is arranged in all the resource elements in a PRB, Physical Resource Block, pair.

10. The radio base station according to claim 1,
wherein the resources where the reference signal is arranged using the arrangement format are designated by using the allocation information.

11. The user terminal according to claim 5, wherein the resources where the reference signal is arranged using the arrangement format are designated by using the allocation information.

12. The fading frequency estimation method according to claim 8, wherein the resources where the reference signal is arranged using the arrangement format are designated by using the allocation information.

13. The fading frequency estimation method according to claim 9, wherein the resources where the reference signal is arranged using the arrangement format are designated by using the allocation information.

**Patentansprüche**

1. Funkbasisstation, die mit einem Benutzerendgerät kommuniziert, umfassend:

einen Anordnungsabschnitt (306), der ein Referenzsignal mit Benutzen eines Anordnungsformats anordnet, wobei das Referenzsignal, das zum Schätzen von Fading-Frequenz in dem Benutzerendgerät benutzt wird, in wenigstens einem Teil von Funkressourcen angeordnet ist, der für einen gemeinsamen Downlinkdatenkanal zugewiesen ist; und
einen Sendeabschnitt (303), der Zuweisungsinformation der Funkressourcen für den gemeinsamen Downlinkdatenkanal zu dem Benutzerendgerät sendet,
**dadurch gekennzeichnet, dass**
das Referenzsignal in dem Anordnungsformat in allen Ressourcenelementen in einem PRB-, Physical-Recource-Block-Paar angeordnet ist.

2. Funkbasisstation nach Anspruch 1, weiterhin einen Empfangsabschnitt (103) umfassend, der Informationen empfängt, um die Fading-Frequenz, die durch Benutzen des Referenzsignals geschätzt wird, von dem Benutzerendgerät zu zeigen.

3. Funkbasisstation nach Anspruch 1 oder Anspruch 2, wobei der Sendeabschnitt die Anzahl von aufeinanderfolgenden Subrahmen, wo das Anordnungsformat benutzt wird, durch Benutzen der Zuweisungsinformation oder Signalisieren einer höheren Ebene, sendet.

4. Funkbasisstation nach Anspruch 1, wobei das Referenzsignal wenigstens eines von einem zellspezifischen Referenz, CRS, einem Demodulationsreferenzsignal (DM-RS) und einem Messungsreferenzsignal, CSI-RS ist.

5. Benutzerendgerät, das mit einer Funkbasisstation kommuniziert, umfassend:

   einen Empfangsabschnitt (401), der Zuweisungsinformationen von Funkressourcen für einen gemeinsamen Uplinkdatenkanal empfängt; und
   einen Anordnungsabschnitt (405) der ein Referenzsignal mit Benutzen eines Anordnungsformats anordnet, in dem das Referenzsignal, das zum Schätzen der Fading-Frequenz in der Funkbasisstation in wenigstens einem Teil der Funkressourcen angeordnet ist, das für den gemeinsamen Uplinkdatenkanal zugewiesen ist,
   **dadurch gekennzeichnet, dass**
   dass das Referenzsignal in dem Anordnungsformat in allen Ressourcenenelementen in einem PRB-, Physical-Resource-Block-Paar angeordnet ist.

6. Benutzerendgerät nach Anspruch 5, weiterhin einen Sendeabschnitt (203) umfassend, der die Anzahl von aufeinanderfolgenden Subrahmen, wo das Anordnungsformat benutzt wird, durch Benutzen eines Uplink-Steuerkanals oder Signalisieren einer höheren Ebene, sendet.

7. Benutzerendgerät nach Anspruch 5 oder Anspruch 6, wobei das Referenzsignal wenigstens eines von einem Demodulationsreferenzsignal, DM-RS, und einem Echolotreferenzsignal, SRS ist.

8. Fading-Frequenzschätzverfahren zum Schätzen von Fading-Frequenz in einem Benutzerendgerät, das mit einer Funkbasisstation kommuniziert, wobei das Fading-Frequenzschätzverfahren die Schritte umfasst, in denen:
   die Funkbasisstation:

   ein Referenzsignal mit Benutzen eines Anordnungsformats anordnet, in dem das Referenzsignal, das zum Schätzen der Fading-Frequenz in dem Benutzerendgerät in wenigstens einem Teil von Funkressourcen angeordnet ist, die für einen gemeinsamen Dowlinkdatenkanal zugewiesen sind; und
   Zuweisungsinformationen der Funkressourcen für den gemeinsamen Downlinkdatenkanal an das Benutzerendgerät sendet; und
   das Benutzerendgerät:

   die Fading-Frequenz beruhend auf einem Kanalschätzwert des Referenzsignals schätzt; und
   die geschätzte Fading-Frequenz an die Funkbasisstation in Reaktion auf eine Sendeanfrage von der Funkbasisstation sendet,
   **dadurch gekennzeichnet, dass**
   das Referenzsignal in dem Anordnungsformat in allen Ressourcenelementen in einem PRB-, Physical-Resource-Block-Paar angeordnet ist.

9. Fading-Frequenzschätzverfahren zum Schätzen der Fading-Frequenz in einer Funkbasisstation, die mit einem Benutzerendgerät kommuniziert, wobei das Fading-Frequenzschätzverfahren die Schritte umfasst, in denen:
   das Benutzerendgerät:

   Zuweisungsinformationen von Funkressourcen für einen gemeinsamen Uplinkdatenkanal empfängt; und
   ein Referenzsignal mit Benutzen eines Anordnungsformats anordnet, wobei das Referenzsignal, das zum Schätzen von Fading-Frequenz in dem Benutzerendgerät benutzt wird, in wenigstens einem Teil von Funkressourcen angeordnet ist, der für den gemeinsamen Uplink-Datenkanal zugewiesen ist; und
   die Funkbasisstation die Fading-Frequenz beruhend auf Kanalschätzwerten des Referenzsignals schätzt,
   **dadurch gekennzeichnet, dass**
   das Referenzsignal in allen Ressourcenelementen in einem PRB-, Physical-Resource-Block-Paar angeordnet ist.

10. Funkbasisstation nach Anspruch 1, wobei die Ressourcen, wo das Referenzsignal mit Benutzen des Anordnungsformats angeordnet ist, durch Benutzen der Zuweisungsinformationen benannt sind.

11. Benutzerendgerät nach Anspruch 5, wobei die Ressourcen, wo das Referenzsignal mit Benutzen des Anordnungsformats angeordnet ist, durch Benutzen der Zuweisungsinformationen benannt sind.

12. Fading-Frequenzschätzverfahren nach Anspruch 8, wobei die Ressourcen, wo das Referenzsignal mit Benutzen des Anordnungsformats angeordnet ist, durch Benutzen der Zuweisungsinformationen benannt sind.

13. Fading-Frequenzschätzverfahren nach Anspruch 9, wobei die Ressourcen, wo das Referenzsignal mit Benutzen des Anordnungsformats angeordnet ist, durch Benutzen der Zuweisungsinformationen benannt sind.

**Revendications**

1. Station de base radio qui communique avec un terminal utilisateur, comprenant :

   une section d'agencement (306) qui agence un signal de référence, en utilisant un format d'agencement, où le signal de référence, qui est utilisé pour estimer la fréquence d'évanouissement dans le terminal utilisateur, est agencé dans au moins une partie de ressources radio affectées à un canal de données partagé en voie descendante ; et
   une section de transmission (303) qui transmet des informations d'affectation des ressources radio pour le canal de données partagé en voie descendante au terminal utilisateur,
   **caractérisée en ce que**
   dans le format d'agencement, le signal de référence est agencé dans tous les éléments de ressources en paire de blocs de ressources physiques, PRB.

2. Station de base radio selon la revendication 1, comprenant en outre une section de réception (103) qui reçoit des informations pour montrer la fréquence d'évanouissement estimée en utilisant le signal de référence, depuis le terminal utilisateur.

3. Station de base radio selon la revendication 1 ou la revendication 2, dans laquelle la section de transmission transmet le nombre de sous-trames consécutives où le format d'agencement est utilisé, en utilisant les informations d'affectation ou une signalisation de couche supérieure.

4. Station de base radio selon la revendication 1, dans laquelle le signal de référence est au moins l'un parmi un signal de référence spécifique à la cellule CRS, un signal de référence de démodulation (DM-RS) et un signal de référence de mesure CSI-RS.

5. Terminal utilisateur qui communique avec une station de base radio, comprenant :

   une section de réception (401) qui reçoit des informations d'affectation de ressources radio pour un canal de données partagé en voie montante ; et
   une section d'agencement (405) qui agence un signal de référence, en utilisant un format d'agencement, où le signal de référence, qui est utilisé pour estimer la fréquence d'évanouissement dans la station de base radio, est agencé dans au moins une partie des ressources radio affectées au canal de données partagé en voie montante,
   **caractérisé en ce que**
   dans le format d'agencement, le signal de référence est agencé dans tous les éléments de ressources en paire de blocs de ressources physiques, PRB.

6. Terminal utilisateur selon la revendication 5, comprenant en outre une section de transmission (203) qui transmet le nombre de sous-trames consécutives où le format d'agencement est utilisé, en utilisant un canal de commande en voie montante ou une signalisation de couche supérieure.

7. Terminal utilisateur selon la revendication 5 ou la revendication 6, dans lequel le signal de référence est au moins l'un parmi un signal de référence de démodulation, DM RS, et un signal de référence de sondage, SRS.

**8.** Procédé d'estimation de fréquence d'évanouissement pour estimer la fréquence d'évanouissement dans un terminal utilisateur qui communique avec une station de base radio, le procédé d'estimation de fréquence d'évanouissement comprenant les étapes dans lesquelles :
la station de base radio :

agence un signal de référence, en utilisant un format d'agencement, où le signal de référence, qui est utilisé pour estimer la fréquence d'évanouissement dans le terminal utilisateur, est agencé dans au moins une partie de ressources radio affectées à un canal de données partagé en voie descendante ; et
transmet des informations d'affectation des ressources radio pour le canal de données partagé en voie descendante au terminal utilisateur ; et
le terminal utilisateur :

estime la fréquence d'évanouissement sur la base d'une valeur d'estimation de canal du signal de référence ; et
transmet la fréquence d'évanouissement estimée à la station de base radio en réponse à une demande de transmission venant de la station de base radio,
**caractérisé en ce que**
dans le format d'agencement, le signal de référence est agencé dans tous les éléments de ressources en paire de blocs de ressources physiques, PRB.

**9.** Procédé d'estimation de fréquence d'évanouissement pour estimer la fréquence d'évanouissement dans une station de base radio qui communique avec un terminal utilisateur, le procédé d'estimation de fréquence d'évanouissement comprenant les étapes dans lesquelles :
le terminal utilisateur :

reçoit des informations d'affectation de ressources radio pour un canal de données partagé en voie montante ; et
agence un signal de référence, en utilisant un format d'agencement, où le signal de référence, qui est utilisé pour estimer la fréquence d'évanouissement dans la station de base radio, est agencé dans au moins une partie des ressources radio affectées au canal de données partagé en voie montante ; et
la station de base radio estime la fréquence d'évanouissement sur la base d'une valeur d'estimation de canal du signal de référence,
**caractérisé en ce que**
dans le format d'agencement, le signal de référence est agencé dans tous les éléments de ressources en paire de blocs de ressources physiques, PRB.

**10.** Station de base radio selon la revendication 1, dans laquelle les ressources où le signal de référence est agencé en utilisant le format d'agencement sont désignées en utilisant les informations d'affectation.

**11.** Terminal utilisateur selon la revendication 5, dans lequel les ressources où le signal de référence est agencé en utilisant le format d'agencement sont désignées en utilisant les informations d'affectation.

**12.** Procédé d'estimation de fréquence d'évanouissement selon la revendication 8, dans lequel les ressources où le signal de référence est agencé en utilisant le format d'agencement sont désignées en utilisant les informations d'affectation.

**13.** Procédé d'estimation de fréquence d'évanouissement selon la revendication 9, dans lequel les ressources où le signal de référence est agencé en utilisant le format d'agencement sont désignées en utilisant les informations d'affectation.

2 GHz
(EXAMPLE)

MACRO BASE
STATION MeNB

M

SMALL BASE
STATION SeNB

3.5 GHz
(EXAMPLE)

S

UE

FIG.1

EP 2 928 249 B1

FIG.2

EP 2 928 249 B1

REFERENCE SIGNAL                                      REFERENCE SIGNAL

CHANNEL ESTIMATION          TIME →
VALUE

CHANNEL ESTIMATION
VALUE

FIG.3

EP 2 928 249 B1

# FIG.4A

SUBFRAME

RESOURCE ELEMENT

PRB

⊠ CRS

▦ DM-RS

▨ CSI-RS

⊡ PDCCH

☐ PDSCH

#0 #1 #2 #3 #4 #5 #6 #7 #8 #9 #10 #11 #12 #13

# FIG.4B

SUBFRAME

RESOURCE ELEMENT

PRB

▦ DM-RS

☐ PDSCH

#0 #1 #2 #3 #4 #5 #6 #7 #8 #9 #10 #11 #12 #13

# FIG.4C

SUBFRAME

RESOURCE ELEMENT

PRB

▦ DM-RS

▩ SRS

☐ PUSCH

#0 #1 #2 #3 #4 #5 #6 #7 #8 #9 #10 #11 #12 #13

SYSTEM BANDWIDTH

PDSCH  EPDCCH  PDCCH

SUBFRAME

PRB INDEX  #0  #1  #2  #3  #4  #5  #6  #7  #8  ...  #n-1

FIG.5

FIG.6A

FIG.6B

FIG.6C

ONE SUBFRAME

TIME

FREQ.

SYSTEM BANDWIDTH

DL ASSIGNMENT

PDCCH

PDSCH, EPDCCH

ESTIMATION REFERENCE SIGNAL

TRIGGER

| 1 | 1 | 0 | 0 | 1 | 0 | 0 | 0 | 1 | 1 |

UE#0 #1    #4    #8 #9

FREQ.

DL ASSIGNMENT

PDCCH

ESTIMATION
REFERENCE SIGNAL

PDSCH, EPDCCH

**FIG.7A**

TRIGGER

| 0 | 1 | 0 | 0 | 0 | 1 | 1 | 0 | 0 | 0 |

UE#0 #1    #4 #5 #6   #8 #9

. . .

TIME

**FIG.7B**

SYSTEM BANDWIDTH

PUCCH

PUSCH

PUCCH

SUBFRAME

PRB INDEX    #0    #1    #2    #3    #4    #5    #6    ...    #n-3    #n-2    #n-1

FIG.8

ONE SUBFRAME

UL grant

PDCCH

ONE SUBFRAME

SYSTEM BANDWIDTH

Freq

PUCCH

PUSCH

ESTIMATION REFERENCE SIGNAL

FIG.9A

ONE SUBFRAME

UL grant

a

UL grant

b

ONE SUBFRAME

Freq

PUCCH

PUSCH

ESTIMATION REFERENCE SIGNAL

FIG.9B

ONE SUBFRAME

UL grant

Time

ONE SUBFRAME

Freq

PUCCH

PUSCH

ESTIMATION REFERENCE SIGNAL

FIG.9C

EP 2 928 249 B1

FIG.10

FIG.11

FIG.12

306 PDSCH TRANSMISSION PROCESS SECTION

303 PDCCH/EPDCCH TRANSMISSION PROCESS SECTION

307 PUSCH RECEIVING PROCESS SECTION

304 HIGHER LAYER CONTROL INFORMATION GENERATING SECTION

305 ESTIMATION REFERENCE SIGNAL GENERATING SECTION

302 PDSCH/PUSCH ALLOCATION INFORMATION GENERATING SECTION

308 CHANNEL ESTIMATION SECTION

ESTIMATION REFERENCE SIGNAL

301 SCHEDULING SECTION

309 FADING FREQUENCY ESTIMATION SECTION

FADING FREQUENCY

FIG.13

EP 2 928 249 B1

```
                            401
         ┌──────────────────────────┐
         │      PDCCH/EPDCCH         │
         │   RECEIVING PROCESS       │
         │       SECTION             │
         └──────────────────────────┘
                      │
                      │  PDSCH ALLOCATION
                      │  INFORMATION
                      ▼
                            402        ESTIMATION              403                              404
         ┌──────────────────────────┐ REFERENCE  ┌──────────────────────────┐   ┌──────────────────────────────┐
         │    PDSCH RECEIVING       │  SIGNAL    │   CHANNEL ESTIMATION     │   │     FADING FREQUENCY         │
         │    PROCESS SECTION       │──────────▶ │        SECTION           │──▶│   ESTIMATION SECTION         │
         └──────────────────────────┘            └──────────────────────────┘   └──────────────────────────────┘
                      │
                      ▼
                      ○
              USER DATA/HIGHER
              LAYER CONTROL                    FADING
              INFORMATION                     FREQUENCY

                            405        ESTIMATION              406
         ┌──────────────────────────┐ REFERENCE  ┌──────────────────────────┐
         │   PUSCH TRANSMISSION     │  SIGNAL    │      ESTIMATION          │
         │   PROCESS SECTION        │◀────────── │   REFERENCE SIGNAL       │
         └──────────────────────────┘            │   GENERATING SECTION     │
    PUSCH                                        └──────────────────────────┘
 ALLOCATION
 INFORMATION
```

FIG.14

FIG.15

CASE 1

| T1 | T2 | T3 | T4 | T5 | T6 | T7 | T8 | T9 | T10 |
|---|---|---|---|---|---|---|---|---|---|
| THERE IS TIME CORRELATION | THERE IS TIME CORRELATION | THERE IS TIME CORRELATION | THERE IS TIME CORRELATION | THERE IS TIME CORRELATION | THERE IS TIME CORRELATION | THERE IS TIME CORRELATION | THERE IS TIME CORRELATION | THERE IS TIME CORRELATION | THERE IS NO TIME CORRELATION |

FIG.16A

CASE 2

| T1 | T2 | T3 | T4 | T5 | T6 | T7 | T8 | T9 | T10 |
|---|---|---|---|---|---|---|---|---|---|
| THERE IS TIME CORRELATION | THERE IS NO TIME CORRELATION | THERE IS NO TIME CORRELATION | THERE IS TIME CORRELATION | THERE IS NO TIME CORRELATION | THERE IS TIME CORRELATION | THERE IS NO TIME CORRELATION | THERE IS TIME CORRELATION | THERE IS TIME CORRELATION | THERE IS NO TIME CORRELATION |

FIG.16B

CASE 3

| T1 | T2 | T3 | T4 | T5 | T6 | T7 | T8 | T9 | T10 |
|---|---|---|---|---|---|---|---|---|---|
| THERE IS NO TIME CORRELATION | THERE IS NO TIME CORRELATION | THERE IS NO TIME CORRELATION | THERE IS TIME CORRELATION | THERE IS NO TIME CORRELATION | THERE IS NO TIME CORRELATION | THERE IS NO TIME CORRELATION | THERE IS NO TIME CORRELATION | THERE IS NO TIME CORRELATION | THERE IS NO TIME CORRELATION |

FIG.16C

EP 2 928 249 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- E-UTRA Further Advancements for E-UTRA Physical Layer Aspects. *3GPP TR 36.814*
- 3GPP DRAFT R2-061949 UE ASSISTED SCHEDULING SWITCHING, 3RD GENERATION PARTNERSHIP PROJECT (3GPP). MOBILE COMPETENCE CENTRE
- Doppler frequency detection using pilot symbols. INFORMATION AND COMMUNICATION ENGINEERS GENERAL CONFERENCE. THE INSTITUTE OF ELECTRONICS, 2000, B-5-59